# EUROPEAN PATENT SPECIFICATION

(11) **EP 4 036 849 B1**
(45) Date of publication and mention of the grant of the patent: **07.01.2026**
(21) Application number: 20868059.5
(22) Date of filing: 15.09.2020
(51) Int. Cl.: G06T 7/00, G06T 5/00

(54) **MACHINE LEARNING MODEL, GENERATION DEVICE, AND COMPUTER PROGRAM**
MASCHINENLERNMODELL, ERZEUGUNGSVORRICHTUNG UND COMPUTERPROGRAMM
MODÈLE D'APPRENTISSAGE AUTOMATIQUE, DISPOSITIF DE GÉNÉRATION ET PROGRAMME INFORMATIQUE

(30) Priority: 27.09.2019 JP 2019177370
(43) Date of publication of application: 03.08.2022
(73) Proprietor: BROTHER KOGYO KABUSHIKI KAISHA, Nagoya-shi, Aichi 467-8561 (JP)
(72) Inventor: KONDO, Masaki, Nagoya-shi, Aichi 467-8561 (JP)
(74) Representative: J A Kemp LLP
(86) International application number: PCT/JP2020/034860
(87) International publication number: WO 2021/060068

(56) References cited:
- WO-A1-2019/159419
- JP-A- 2018 531 648
- JP-A- 2019 067 078
- HASELMANN MATTHIAS ET AL: "Anomaly Detection Using Deep Learning Based Image Completion", 2018 17TH IEEE INTERNATIONAL CONFERENCE ON MACHINE LEARNING AND APPLICATIONS (ICMLA), IEEE, 17 December 2018 (2018-12-17), pages 1237 - 1242, XP033502442, DOI: 10.1109/ICMLA.2018.00201
- TAO XIAN ET AL: "Detection of Power Line Insulator Defects Using Aerial Images Analyzed With Convolutional Neural Networks", IEEE TRANSACTIONS ON SYSTEMS, MAN, AND CYBERNETICS: SYSTEMS, IEEE, PISCATAWAY, NJ, USA, vol. 50, no. 4, 15 October 2018 (2018-10-15), pages 1486 - 1498, XP011778713, ISSN: 2168-2216, [retrieved on 20200316], DOI: 10.1109/TSMC.2018.2871750
- MAX FERGUSON ET AL: "Detection and Segmentation of Manufacturing Defects with Convolutional Neural Networks and Transfer Learning", SMART AND SUSTAINABLE MANUFACTURING SYSTEMS, vol. 2, no. 1, 3 September 2018 (2018-09-03), US, pages 20180033, XP055764350, ISSN: 2520-6478, DOI: 10.1520/SSMS20180033

## Description

### Technical Field

The present specification relates to a machine learning model that generates image data.

### Background

In recent years, the use and development of machine learning models such as neural networks and support vector machines have been progressing. For example, in the technique disclosed in a non-patent document 1, a data generation model called Variational Autoencoder (VAE) is used for anomaly detection of industrial products.

### Prior Art Document

### Non-Patent Document

"Anomaly Manufacturing Product Detection using Unregularized Anomaly Score on Deep Generative Models" at The 32nd Annual Conference of the Japanese Society for Artificial Intelligence in 2018 and authored by TACHIBANA Ryosuke, MATSUBARA Takashi and UEHARA Kuniaki,

"Anomaly Detection Using Deep Learning Based Image Completion" at the 2018 17TH IEEE INTERNATIONAL CONFERENCE ON MACHINE LEARNING AND APPLICATIONS (ICMLA), IEEE, and authored by HASELMANN MATTHIAS ET AL, and "Detection of Power Line Insulator Defects Using Aerial Images Analyzed With Convolutional Neural Networks" by TAO XIAN ET AL, IEEE TRANSACTIONS ON SYSTEMS, MAN, AND CYBERNETICS: SYSTEMS, IEEE, vol. 50, no. 4, and "Detection and Segmentation of Manufacturing Defects with Convolutional Neural Networks and Transfer Learning" by MAX FERGUSON ET AL, SMART AND SUSTAINABLE MANUFACTURING SYSTEMS, vol. 2, no. 1, are background art.

### Technical Problem

A model that extracts features by compressing information, such as VAE, can extract abstract features. However, information compression loses small features. When image data of an image including an object is generated using such a model, it is difficult for the generated image data to represent a fine shape of the object. Such a problem is common in not only a model that extracts features by compressing information, but models that extract features by other methods.

The present specification discloses a technique capable of generating image data representing an object having a fine shape.

The invention is defined in the independent claims. Further aspects and preferred embodiments are defined in the dependent claims. Any aspects, embodiments and examples of the present disclosure which do not fall under the scope of the appended claims do not form part of the invention and are merely provided for illustrative purposes.

The techniques disclosed herein can be realized as the following application examples.

[Application Example 1] A trained machine learning model for generating output image data corresponding to input image data of an input image including an input object is disclosed. The machine learning model performs extracting a shape feature of the input object included in the input image of the input image data, and generating the output image data of an output image including an output object based on the extracted shape feature, by executing an operation using a plurality of calculation parameters on the input image data. The machine learning model includes an input layer that executes an operation using the input image data and an output layer that is provided on the downstream side of the input layer and generates the output image data. The input layer includes a first extraction unit and a second extraction unit that is provided in parallel with the first extraction unit. The first extraction unit extracts a shape feature of a portion included in a first input range, that is smaller than the input image, in the input object. The second extraction unit extracts a shape feature of a portion included in a second input range, that is smaller than the input image and larger than the first input range, in the input object. The input layer further includes one or more displacement information obtaining unit that obtains displacement information that relates to position displacement of the shape feature, in the input image, extracted by the first extraction unit, by executing an operation using the data outputted from the first extraction unit. The input layer further includes an addition unit that adds a plurality of data including data outputted from the first extraction unit, data outputted from the second extraction unit, and data outputted from the one or more displacement information acquisition units.

According to this configuration, the first extraction unit outputs data corresponding to the shape feature of the portion included in the relatively small first input range, that is, the feature of the relatively fine shape, and the second extraction unit outputs data corresponding to the shape feature of the portion included in the relatively large second input range, that is, the feature of the relatively coarse shape. Then, since the input layer adds those data, output image data representing an output object having a relatively fine shape in addition to a relatively coarse shape is generated. Further, since the data output from the displacement information acquisition unit, that is, the data corresponding to the displacement information that relates to the position displacement of the shape feature in the input image extracted by the first extraction unit is added, robustness can be improved against position displacement of relatively fine shape feature in the input image.

[Application Example 2] In the machine learning model described in Application Example 1, the output layer includes a first restoration unit and a second restoration unit that is provided in parallel with the first restoration unit. The first restoration unit restores the shape feature by using a portion corresponding to the first output range, that is smaller than the output image, in the data to be processed. The second restoration unit restores the shape feature by using a portion corresponding to the second output range, that is smaller than the output image and larger than the first output range, in the data to be processed.

According to this configuration, the first restoration unit restores the shape feature using the portion of the data to be processed corresponding to the relatively small first output range. That is, the first restoration unit restores the relatively fine shape feature. The second restoration unit restores the shape feature by using the portion of the data to be processed corresponding to the relatively large second output range. That is, the second restoration unit restores the relatively coarse shape feature. Therefore, it is possible to generate output image data representing the output object having a relatively fine shape in addition to a relatively coarse shape.

[Application Example 3] In the machine learning model according to Application Example 1 or 2, the input layer includes the first extraction unit which is a convolution layer, the second extraction unit which is a convolution layer, and the displacement information acquisition unit which is a pooling layer. The output layer does not include the pooling layer, and includes the first restoration unit which is a transposed convolution layer and the second restoration unit which is a translocation convolution layer.

Since the input layer includes the displacement information obtaining unit, which is the pooling layer, the influence of the position displacement in the input image of the shape feature on the calculation by the output layer is mitigated. Therefore, the output layer, that does not include the pooling layer and includes the first restored portion that is the transposed convolution layer and the second restored portion that is the transposed convolution layer, generates output image data representing an output object having a relatively fine shape in addition to a relatively coarse shape.

[Application Example 4] In the machine learning model according to any one of Application Examples 1 to 3, the one or more displacement information obtaining unit includes a first displacement information obtaining unit and a second displacement information obtaining unit that is provided in parallel with the first displacement information acquisition unit. The first displacement information obtaining unit obtains first displacement information that relates to position displacement within a first displacement range smaller than the input image. The second displacement information obtaining unit obtains second displacement information that relates to position displacement within a second displacement range that is smaller than the input image and larger than the first displacement range. The addition unit adds the plurality of data including the data outputted from the first extraction unit, the data outputted from the second extraction unit, the data outputted from the first displacement information obtaining unit, and the data outputted from the second displacement information obtaining unit.

According to this configuration, the first displacement information obtaining unit obtains the first displacement information that relates to the position displacement within the relatively small first displacement range, that is, the relatively small position displacement. The second displacement information obtaining unit obtains the second displacement information that relates to the position displacement within the relatively large second displacement range, that is, the relatively large position displacement. Then, in the input layer, since those data are added, the robustness can be improved with respect to the relatively small position displacement and the relatively large position displacement.

[Application Example 5] In the machine learning model according to any one of Application Examples 1 to 4, the input layer includes a third extraction unit that is provided in parallel with the first extraction unit and the second extraction unit. The third extraction unit extracts the shape feature of the portion included in a third input range that is smaller than the input image and larger than the second input range of the input object. The addition unit adds the plurality of data including the data outputted from the first extraction unit, the data outputted from the second extraction unit, the data outputted from the third extraction unit, and the data outputted from the one or more displacement information obtaining unit.

According to this configuration, three types of shape features corresponding to three types of fineness are extracted, and three types of data corresponding to the three types of shape feature are added, so output image data representing output objects with three shape features corresponding to three types of fineness can be generated.

[Application Example 6] The machine learning model according to any one of Application Examples 1 to 5, the plurality of calculation parameters is adjusted, by training, so that the difference between reference image data of a reference image including a reference object and output image data generated by inputting the reference image data into the machine learning model is small.

According to this configuration, by inputting the input image data of the input image including the input object into the machine learning model, the output image data of the output image including the output object can be generated, while the output object is based on the shape feature extracted by the input layer, and the difference between the output object and the reference object is small.

[Application Example 7] A generation device, for generating image data, includes an obtaining unit that obtains input image data of an input image including an input object, an output image data generation unit that generates output image data corresponding to the input image data by inputting the input image data into a trained machine learning model, a difference image data generation unit that generates difference image data of the difference image representing difference between the output image data of the output image data and the input image data. The machine learning model performs extracting a shape feature of the input object included in the input image of the input image data, and generating the output image data of the output image including the output object based on the extracted shape feature, by executing an operation using a plurality of calculation parameters on the input image data. The machine learning model includes an input layer that executes an operation using the input image data and an output layer that is provided on the downstream side of the input layer and generates the output image data. The input layer includes a first extraction unit and a second extraction unit that is provided in parallel with the first extraction unit. The first extraction unit extracts a shape feature of a portion included in a first input range, that is smaller than the input image, in the input object. The second extraction unit extracts a shape feature of a portion included in a second input range, that is smaller than the input image and larger than the first input range, in the input object. The input layer further includes one or more displacement information obtaining unit that obtains displacement information that relates to position displacement of the shape feature, in the input image, extracted by the first extraction unit in the input image, by executing an operation using the data output from the first extraction unit. The input layer further includes an addition unit that adds a plurality of data including data outputted from the first extraction unit, data outputted from the second extraction unit, and data outputted from the one or more displacement information acquisition units. The plurality of calculation parameters is adjusted, by training, so that the difference between reference image data of a reference image including a reference object and output image data generated by inputting the reference image data into the machine learning model is small.

According to this configuration, by inputting the input image data of the input image including the input object into the machine learning model, the output image data of the output image including the output object can be generated, while the output object is based on the shape feature extracted by the input layer, and the difference between the output object and the reference object is small. Therefore, it is possible to generate difference image data representing the difference between the input object and the reference object.

[Application Example 8] In the generation device according to the application example 7, the difference image data generation unit obtains smoothed input image data by performing a smoothing process on the input image data, obtains smoothed output image data by performing a smoothing process on the output image data, and generates the difference image data by using the smoothed input image data and the smoothed output image data.

According to this configuration, noise included in the difference image data can be reduced.

[Application Example 9] In the generation device according to the application example 8, the difference image data generation unit performs an edge extraction process for extracting an edge portion in the image of the smoothed output image data, and corrects the difference image data by performing on the difference image data a process of extracting from the difference image a non-edge portion that is different from the edge portion.

Due to the misalignment of the object between the input image and the output image, the difference image may include edges. According to the above configuration, the corrected difference image data can appropriately show a difference that is different from the edge due to the misalignment between the input image and the output image.

[Application Example 10] A computer program for a computer that generates image data causes a computer to perform an obtaining function for obtaining input image data of an input image including an input object, an output image data generation function that generates output image data corresponding to the input image data by inputting the input image data into a trained machine learning model, and a difference image data generation function that generates difference image data of the difference image representing the difference between the input image and the output image of the output image data. The machine learning model performs extracting a shape feature of the input object included in the input image of the input image data, and generating the output image data of the output image including the output object based on the extracted shape feature, by executing an operation using a plurality of calculation parameters on the input image data. The machine learning model includes an input layer that executes an operation using the input image data and an output layer that is provided on the downstream side of the input layer and generates the output image data. The input layer includes a first extraction unit and a second extraction unit that is provided in parallel with the first extraction unit. The first extraction unit extracts a shape feature of a portion included in a first input range, that is smaller than the input image, in the input object. The second extraction unit extracts a shape feature of a portion included in a second input range, that is smaller than the input image and larger than the first input range, in the input object. The input layer further includes one or more displacement information obtaining unit to obtain displacement information that relates to position displacement of the shape feature, in the input image, extracted by the first extraction unit in the input image, by executing an operation using the data output from the first extraction unit. The input layer further includes an addition unit to add a plurality of data including data outputted from the first extraction unit, data outputted from the second extraction unit, and data outputted from the one or more displacement information acquisition units. The plurality of calculation parameters is adjusted, by training, so that the difference between reference image data of a reference image including a reference object and output image data generated by inputting the reference image data into the machine learning model is small.

[Application Example 11] In the computer program according to Application Example 10, the difference image data generation function obtains smoothed input image data by performing a smoothing process on the input image data, obtains smoothed output image data by performing a smoothing process on the output image data, and generates the difference image data by using the smoothed input image data and the smoothed output image data.

[Application Example 12] In the computer program according to Application Example 11, the difference image data generation unit performs an edge extraction process for extracting an edge portion in the image of the smoothed output image data, and corrects the difference image data by performing on the difference image data a process of extracting from the difference image a non-edge portion that is different from the edge portion.

[Application Example 13] A generation device, for generating image data, includes an obtaining unit that obtains input image data of an input image including an input object, and an output image data generation unit that generates output image data corresponding to the input image data by inputting the input image data into a trained machine learning model. The machine learning model performs extracting a shape feature of the input object included in the input image of the input image data, and generating the output image data of the output image including the output object based on the extracted shape feature, by executing an operation using a plurality of calculation parameters on the input image data. The machine learning model includes an input layer that executes an operation using the input image data and an output layer that is provided on the downstream side of the input layer and generates the output image data. The input layer includes a first extraction unit and a second extraction unit that is provided in parallel with the first extraction unit. The first extraction unit extracts a shape feature of a portion included in a first input range, that is smaller than the input image, in the input object. The second extraction unit extracts a shape feature of a portion included in a second input range, that is smaller than the input image and larger than the first input range, in the input object. The input layer further includes one or more displacement information obtaining unit that obtains displacement information that relates to position displacement of the shape feature, in the input image, extracted by the first extraction unit in the input image, by executing an operation using the data output from the first extraction unit. The input layer further includes an addition unit that adds a plurality of data including data outputted from the first extraction unit, data outputted from the second extraction unit, and data outputted from the one or more displacement information acquisition units. The plurality of calculation parameters is adjusted, by training, so that the difference between reference image data of a reference image including a reference object and output image data generated by inputting the reference image data into the machine learning model is small.

The techniques disclosed in the present specification can be implemented in various aspects, for example, a training method of a machine learning model, a training device for executing the training, methods and devices for generating image data using a trained machine learning model, deciding methods and devices that use image data, computer programs for implementing the functions of those methods or devices, recording media on which the computer programs are recorded (e.g., non-transitory recording media).

### Brief Description of Drawings

FIG 1 is an explanatory drawing that shows the image processing system of an embodiment.
FIG. 2 is an explanatory drawing of an example of a learning model 234.
FIG. 3 is a block diagram that shows a configuration of an input layer L10.
FIG. 4 is a block diagram that shows a configuration of an intermediate layer L20.
FIG. 5 is a block diagram that shows a configuration of an output layer L30.
FIG. 6 is a flowchart that shows an example of a training process.
FIG. 7A is an explanatory view of a reference label sheet 800.
FIG. 7B is an explanatory view of an example of reference image data.
FIG. 7C is an explanatory view of an example of output image data.
FIG. 8 is a flowchart that shows an example of a difference data generation process.
FIG. 9 is an explanatory chart of image processing.

### Embodiment

### A. First Example:

### A1. Device configuration:

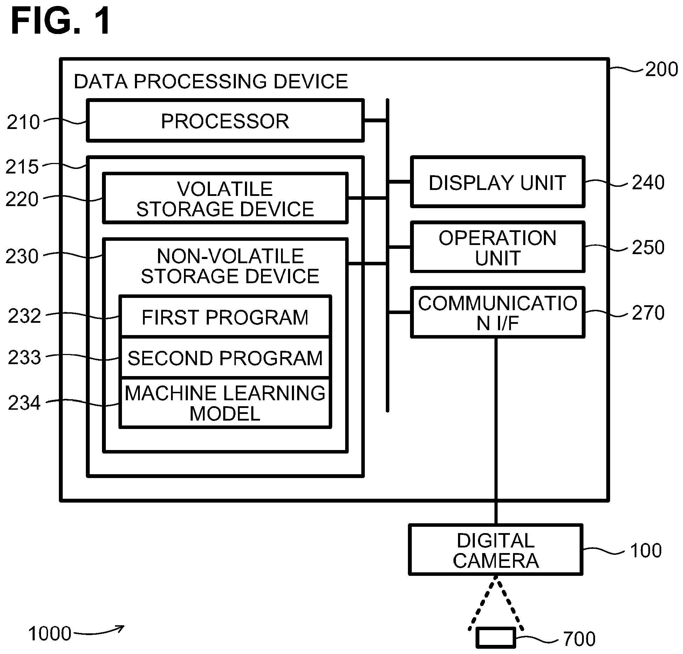

FIG. 1 is an explanatory diagram showing an image processing system of an embodiment. The image processing system 1000 is a system for processing image data of an appearance of a product 700. The product 700 may be any product and is predetermined. In this embodiment, the product 700 is a label sheet on which various objects such as characters and figures are printed. Hereinafter, the product 700 is also referred to as a label sheet 700.

The image processing system 1000 includes a data processing device 200 and a digital camera 100 connected to the data processing device 200. The data processing device 200 is, for example, a personal computer. The data processing device 200 includes a processor 210, a storage device 215, a display unit 240 for displaying an image, an operation unit 250 for accepting an operation by a user, and a communication interface 270. These elements are connected to each other via a bus. The storage device 215 includes a volatile storage device 220 and a non-volatile storage device 230.

The processor 210 is a device that performs data processing, for example, a CPU. The volatile storage device 220 is, for example, a DRAM, and the non-volatile storage device 230 is, for example, a flash memory.

The non-volatile storage device 230 stores a first program 232, a second program 233, and a prediction model 234. In this embodiment, the prediction model 234 is a model of an artificial neural network, that is, a machine learning model trained by a training process described later (hereinafter, also referred to as "machine learning model 234" or simply "learning model 234"). In this embodiment, the learning model 234 is a program module. The details of the learning model 234 will be described later.

The processor 210 temporarily stores various intermediate data used for executing the first program 232, the second program 233, and the learning model 234 in the storage device 215 (for example, the volatile storage device 220 and the non-volatile storage device 230).

The display unit 240 is a device for displaying an image, such as a liquid crystal display or an organic EL display. The operation unit 250 is a device that receives operations by a user, such as a touchscreen superposed on the display unit 240, buttons, and levers. The user can input various instructions to the data processing device 200 by operating the operation unit 250. The communication interface 270 is an interface for communicating with other devices (for example, a USB interface, a wired LAN interface, and an IEEE 802.11 wireless interface). The digital camera 100 is connected to the communication interface 270.

### A2. Structure of learning model:

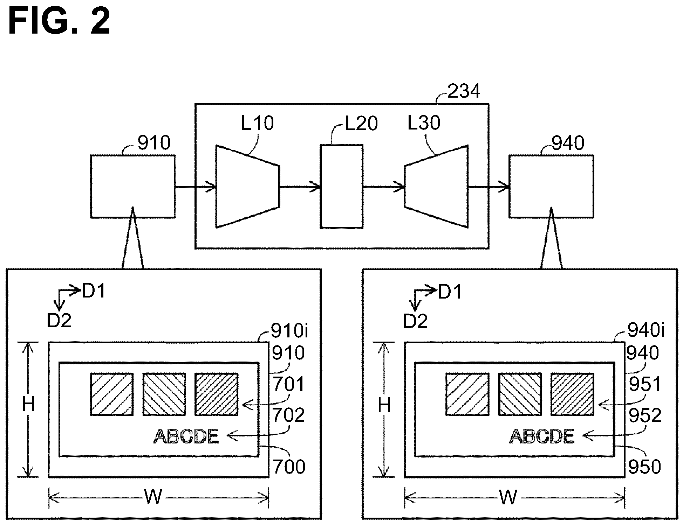

FIG. 2 is an explanatory diagram of an example of the learning model 234. In this embodiment, functions of the learning model 234 are implemented by the processor 210 executing the learning model 234 which is a program module. Input image data 910 is input to the learning model 234. The input image data 910 is image data obtained by optically reading the label sheet 700 (FIG. 1), and the input image 910i represented by the input image data 910 represents the label sheet 700. In this embodiment, the figure 701 and the character string 702 are printed on the label sheet 700.

The learning model 234 extracts a feature of the input image 910i of the input image data 910 and reconstructs the input image 910i based on the extracted feature to generate output image data 940 representing output image 940i. The output image 940i represents a label sheet 950 reconstructed from the label sheet 700 of the input image 910i. The label sheet 950 of the output image 940i has a figure 951 corresponding to the figure 701 and a character string 952 corresponding to the character string 702.

The input image 910i and the output image 940i are rectangular images each having two sides parallel to the first direction D1 and two sides parallel to the second direction D2 perpendicular to the first direction D1. These images 910i, 940i are represented by color values of a plurality of pixels arranged in a matrix along the first direction D1 and the second direction D2. The width W indicates the number of pixels in the first direction D1, and the height H indicates the number of pixels in the second direction D2. In this embodiment, the input image data 910 and the output image data 940 are bitmap data indicating the color values of the plurality of pixels. Further, in this embodiment, the color value of each pixel is represented by gradation value of 256 gradations from 0 to 255 of R (red), G (green) and B (blue).

The actual label sheet 700 may have defects such as a part of the object (figure 701 or character string 702 in this embodiment) being chipped. In this embodiment, the training model 234 is trained to generate output image data 940 representing a defect-free label sheet, even if the label sheet 700 of the input image 910i has defects (details are below).

The learning model 234 includes an input layer L10 to which the input image data 910 is input, an intermediate layer L20 for processing the data from the input layer L10, and an output layer L30 for processing the data from the intermediate layer L20.

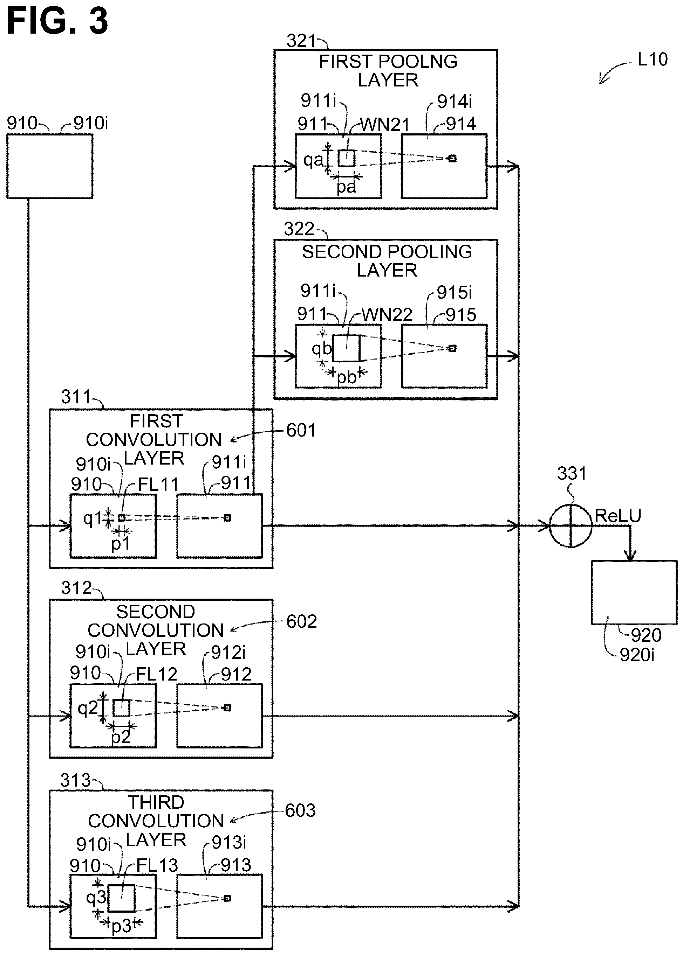

FIG. 3 is a block diagram showing a configuration of the input layer L10. The input layer L10 uses the input image data 910 to generate feature data 920 showing features of the input image data 910 (that is, features of the input image 910i). Such an input layer L10 is also referred to an encoder. In this embodiment, the input layer L10 includes three convolution layers 311-313, two pooling layers 321, 322, and an addition unit 331.

Input image data 910 is input to each of the three convolution layers 311-313. Each convolution layer 311-313 executes a convolution process and a bias addition process, respectively.

The convolution process by the first convolution layer 311 is a process of calculating a correlation value indicating a correlation with a first-class input filter FL11, applying to the input data first-class input filters FL11 having a size of "p1 × q1 × r". The value p1 indicates a size (number of pixels) of the first direction D1 of the first-class input filter FL11, the value q1 indicates a size (number of pixels) of the second direction D2 of the first-class input filter FL11, and the value r indicates the number of color components (3 for RGB in this embodiment). One first-class input filter FL11 contains "p1 × q1 × r" weights. In the process of applying the first-class input filter FL11, the RGB gradation values of "p1 × q1" pixels of a portion corresponding to the position of the first-class input filter FL11, that is, a list of "p1 × q1 × r" gradation values, is obtained from the input image data 910. The inner product of the obtained list and the list of "p1 × q1 × r" weights of the first-class input filter FL11 is calculated. The bias addition process is a process of adding a bias prepared one by one to the one first-class input filter FL11 to the inner product. "Inner product + bias" indicates the correlation value. The calculation of the correlation value is performed at each of a plurality of positions of the first-class input filter FL11 while sliding the first-class input filter FL11. The one first-class input filter FL11 generates bitmap data 911 indicating a correlation value at each of a plurality of positions of the first-class input filter FL11. An image 911i represented by the bitmap data 911 is also referred to as a feature map or a convolution map. The positions of the pixels of the convolution map 911i indicate the positions of the first-class input filter FL11. In this embodiment, the convolution process is performed such that the size of the convolution map 911i (that is, the number of pixels in the first direction D1 and the number of pixels in the second direction D2) is the same as the size of the input image 910i (that is, W × H). Therefore, a stride (an amount by which the filter is slid) is 1. Further, around the input image 910i, pixels are supplemented by zero padding.

The total number s of filters is also referred to as a number of channels. When s first-class input filters FL11 are used, s pieces of bitmap data 911 are generated. In this embodiment, the number of channels s is 8.

The convolution layers 311-313 generate bitmap data 911-913 using the input filters FL11-FL13, respectively. The sizes of the three types of input filters FL11-FL13 are different. A second-class input filter FL12 is larger than the first-class input filter FL11, and the third-class input filter FL13 is larger than the second-class input filter FL12. The size comparison between the two filters is done as follows. When a first filter is superposed on a second filter so that the second filter covers the entire first filter, and the second filter includes a portion that does not overlap with the first filter, it is determined that the second filter is larger than the first filter. The same applies not only to filters but also to comparison of the sizes of two-dimensional areas such as images and windows.

In this embodiment, the size of the first-class input filter FL11 is p1 × q1, the size of the second-class input filter FL12 is p2 × q2, and the size of the third-class input filter FL13 is p3 × q3. Then, p1 < p2 < p3 and q1 < q2 < q3. For example, p1 = 1, p2 = 2, p3 = 3, q1 = 1, q2 = 2, and q3 = 3. The only difference between the convolution layers 311-313 is in filter size. For example, the number s of channels is common to the three convolution layers 311-313. The second convolution layer 312 generates s pieces of bitmap data 912 (that is, s convolution maps 912i), and the third convolution layer 313 generates s pieces of bitmap data 913 (that is, s convolution map 913i). All of the input filters FL11-FL13 are smaller than the input image 910i of the input image data 910. The size of the input filters FL11-FL13 may be set to a larger value as the size of the input image 910i is larger.

The value of each pixel of the convolution maps 911i-913i generated by the convolution layers 311-313 is greatly influenced by the shape of the portion of the object of the input image 910i included in the input filters FL11-FL13. As described above, the convolution maps 911i-913i may indicate a shape feature of the portion included in the input filters FL11-FL13. The first convolution map 911i may show the shape feature of the small-sized portion included in the small-sized first-class input filter FL11. The second convolution map 912i may indicate the shape feature of the medium-sized portion contained in the medium-sized second-class input filter FL12. The third convolution map 913i may indicate the shape feature of the large-sized portion included in the large-sized third-class input filter FL13. For example, the first convolution layer 311 may extract features of fine shapes such as points, the second convolution layer 312 may extract linear features, and the third convolution layer 313 may extract curved features. In this way, the convolution layers 311-313 may extract the shape feature of the portion of the object of the input image 910i included in the input filters FL11-FL13. The first convolution map 911i may extract high resolution information. The second convolution map 912i may extract intermediate resolution information. The third convolution map 913i may extract low resolution information. It should be noted that extracting features of a fine shape can be rephrased as extracting high-resolution information. In addition, extracting coarse-shaped features can be rephrased as extracting low-resolution information.

Bitmap data 911 from the first convolution layer 311 is input to the two pooling layers 321, 322, respectively. The pooling layers 321, 322 execute a process of determining a representative value using a plurality of values of a plurality of pixels included in the window. In this embodiment, the pooling layers 321, 322 perform so-called max pooling, respectively.

A first pooling layer 321 applies the first window WN21 of "pa × qa" to the input bitmap data 911. The value pa indicates a size (number of pixels) of the first direction D1 of the first window WN21, and the value qa indicates a size (number of pixels) of the second direction D2 of the first window WN21. The selection of the maximum value using the first window WN21 is performed at each of the plurality of positions of the first window WN21 while sliding the first window WN21. The first pooling layer 321 generates bitmap data 914 indicating the maximum value at each of the plurality of positions of the first window WN21. An image 914i represented by the bitmap data 914 is also referred to as a feature map or a pooling map. The position of the pixel of the pooling map 914i indicates the position of the first window WN21. In this embodiment, the max pooling is performed so that the size of the output pooling map 914i (that is, the number of pixels in the first direction D1 and the number of pixels in the second direction D2) is the same as the size of the input convolution map 911i (that is, the size W × H of input images 910i). Therefore, the stride (the amount of sliding the window) is 1. Further, around the input convolution map 911i, pixels are supplemented by zero padding.

S pieces of bitmap data 911 are input to the first pooling layer 321. The first pooling layer 321 generates s pieces of bitmap data 914 from s pieces of bitmap data 911.

A second pooling layer 322 uses the second window WN22 to generate bitmap data 915. The second window WN22 is larger than the first window WN21. Specifically, the size of the first window WN21 is pa × qa, and the size of the second window WN22 is pb × qb. Then, pa < pb and qa < qb. For example, pa = 3, pb = 5, qa = 3, and qb = 5. The only difference between the pooling layers 321 and 322 is the difference in window size. The second pooling layer 322 generates s pieces of bitmap data 915 (that is, s pooling maps 915i) from s pieces of bitmap data 911 (that is, s convolution maps 911i).

As described above, the convolution map 911i inputted to the pooling layers 321, 322 shows the shape feature of the object of the input image 910i. The pooling layers 321, 322 determine typical values (maximum values in this embodiment) in the windows WN21, WN22. Therefore, when the position displacement of the feature portion in the convolution map 911i is within the range of the windows WN21, WN22, that is, the position displacement of the feature portion of the object in the input image 910i is within the range of the windows WN21, WN22, approximately the same representative value can be determined from the windows WN21, WN22. In this way, the pooling layers 321, 322 extracts the shape feature extracted by the first convolution layer 311 while allowing the position displacement of the feature portion within the range of the windows WN21, WN22. The effect of the position displacement of the feature portion on the input image 910i on the pooling maps 914i, 915i is mitigated when the position displacement is within the range of the windows WN21, WN22. When the position displacement exceeds the range of the windows WN21, WN22, the pooling maps 914i, 915i may change according to the position displacement. As described above, the pooling maps 914i, 915i indicate information regarding the position displacement, in the input image 910i, of the shape feature extracted by the first convolution layer 311.

The addition unit 331 generates feature data 920 using five bitmap data 911-915 from the convolution layers 311-313 and the pooling layers 321, 322. The feature data 920 represents a map of the same size as the input maps 911i-915i (also referred to as a feature map 920i). In this embodiment, the addition unit 331 enters a total value of the five values of the five pixels at the same position of the five maps 911i-915i into the activation function, and adopts the calculated value of the activation function as the value of the pixel at the same position of the feature map 920i. In this embodiment, a so-called ReLU (Rectified Linear Unit) is used as the activation function. The addition unit 331 executes a process of generating one feature data 920 from the five bitmap data 911-915 for each channel. In this embodiment, since the number s of channels is 8, the addition unit 331 generates eight pieces of feature data 920. The s pieces of feature data 920 are supplied to the intermediate layer L20 (FIG. 2).

The first convolution layer 311 uses a calculation parameter set 601 that includes "p1 × q1 × r × s" weights of the s first-class input filters FL11 and s biases corresponding to the s first-class input filters FL11. Similarly, the second convolution layer 312 uses a calculation parameter set 602 that includes s "p1 × q1 × r × s" weights and s biases of the s second-class input filters FL12. The third convolution layer 313 uses a calculation parameter set 603 including "p1 × q1 × r × s" weights and s biases of the s third-class output filters FL33.

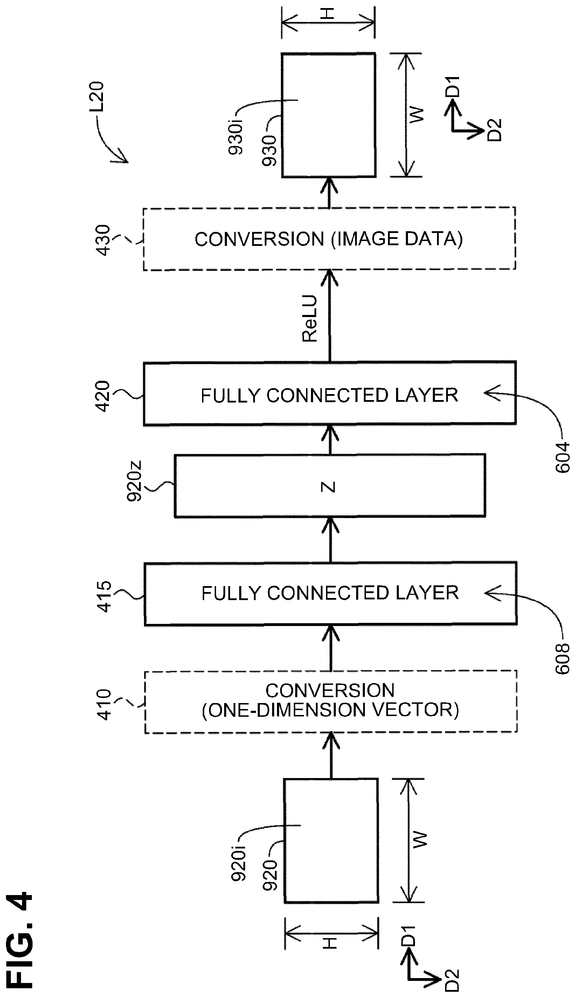

FIG. 4 is a block diagram that shows a configuration of the intermediate layer L20. The intermediate layer L20 uses s pieces of feature data 920 to generate s pieces of intermediate data 930 for output. In this embodiment, the intermediate layer L20 includes a first conversion unit 410, a first fully connected layer 415, a second fully connected layer 420, and a second conversion unit 430.

One feature map 920i indicates each value of "W × H" pixels (hereinafter, the value associated with the pixel of the feature map is also referred to as a feature value). The s pieces of feature data 920 indicates "W × H × s" feature values. The first fully connected layer 415, which will be described later, processes "W × H × s" feature values as a one-dimensional vector. The first conversion unit 410 converts the reference order of the "W × H × s" feature values to the reference order of the elements of the one-dimensional vector according to the predetermined correspondence between the "W × H × s" feature values and the elements of the one-dimensional vector. The first conversion unit 410 may be omitted, and the first fully connected layer 415 may refer to "W × H × s" feature values according to the above correspondence.

The first fully connected layer 415 is a layer similar to the fully connected layer used in a general neural network. In this embodiment, the first fully connected layer 415 calculates N feature values using "W × H × s" feature values. N may be an integer of 1 or more and may be an integer of 2 or more. N may be the same as "W × H × s" and may be an integer smaller than "W × H × s". Further, N may be an integer larger than "W × H × s". Each of the N feature values is also referred to a latent variable (hereinafter, also referred to as a latent variable 920z). The first fully connected layer 415 calculates the inner product of the input vector composed of "W × H × s" feature values and the weight vector composed of "W × H × s" weights. The calculated inner product is output as one feature value. Bias addition and operation by the activation function are omitted. The weight vector is prepared separately for each of the N intermediate values. The first fully connected layer 415 uses a calculation parameter set 608 containing N weight vectors (i.e., "W × H × s × N" weights).

The second fully connected layer 420 is a layer similar to the fully connected layer used in a general neural network. In this embodiment, the second fully connected layer 420 calculates "W × H × s" intermediate values using N feature values from the first fully connected layer 415. The second fully connected layer 420 calculates a value (inner product + bias) obtained by adding a bias to the inner product of the input vector composed of N feature values and the weight vector composed of N weights, and enters the calculated value into the activation function. The calculated value of the activation function is used as one intermediate value. In this embodiment, so-called ReLU is used as the activation function. The weight vector and the bias are prepared separately for each of the "W × H × s" intermediate values. The second fully connected layer 420 uses the calculation parameter set 604 that includes "W × H × s" weight vectors (i.e., "N × W × H × s" weights) and "W × H × s" biases.

The output layer L30 (FIG. 2), which will be described later, processes "W × H × s" intermediate values as s maps. One map is represented by the values of "W × H" pixels, similar to an image of "W × H" size. The second conversion unit 430 convers a reference order of the "W × H × s" intermediate values to a reference order of a plurality of pixels of the s map according to a predetermined correspondence between the "W × H × s" intermediate values and the plurality of pixels of the s map. Hereinafter, each of the s maps is also referred to as an intermediate map 930i. Further, the data representing the intermediate map 930i is also referred to as intermediate data 930. The intermediate layer L20 generates s pieces of intermediate data 930. The s pieces of intermediate data 930 are supplied to the output layer L30 (FIG. 2). The intermediate value of the intermediate map 930i is calculated using N feature values of the latent variable 920z. Therefore, the intermediate value indicates the feature of the object of the input image 910i. The second conversion unit 430 may be omitted, and the output layer L30 may refer to "W × H × s" intermediate values according to the above correspondence.

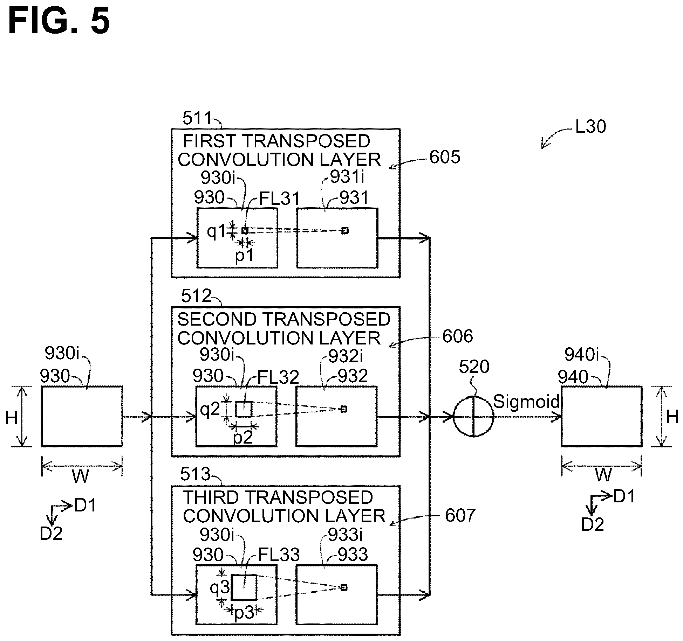

FIG. 5 is a block diagram that shows a configuration of the output layer L30. The output layer L30 uses s pieces of intermediate data 930 and generates output image data 940 indicating an image of the object. Such an output layer L30 is also referred to as a decoder. In this embodiment, the output layer L30 includes three transposed convolution layers 511, 512, 513, and an addition unit 520.

S pieces of intermediate data 930 are input to each of the three transposed convolution layers 511-513. Each of the transposed convolution layers 511-513, respectively, executes transposed convolution and bias addition processing. The transpose convolution is a process of restoring the features extracted by the convolution process, and includes, for example, a process of enlarging the input map and a convolution process using the enlarged map. Such transpose convolution is used as part of the decoder. In this embodiment, the map enlargement process is omitted. Then, the transposed convolution layers 511-513 generate one image from the s intermediate maps 930i by the convolution process.

The convolution process by the first transposed convolution layer 511 is a process of calculating a correlation value indicating a correlation between input data and a first-class output filter FL31, by applying the first-class output filter FL31 having a size of "p1 × q1 × s" to the inputted s pieces of intermediate data 930. The values p1 and q1 are sizes of the first-class output filter FL31, and are the same as the size of the first-class input filter FL11 of the first convolution layer 311 (FIG. 3). As will be described later, the first transposed convolution layer 511 uses r first-class output filters FL31. One first-class output filter FL31 contains "p1 × q1 × s" weights. In the process of applying the first-class output filter FL31, the intermediate value of "p1 × q1" pixels of the portion corresponding to the position of the first-class output filter FL31 from each of the s pieces of intermediate data 930, that is, a list of "p1 × q1 × s" intermediate values, is obtained. The inner product of the obtained list and the list of "p1 × q1 × s" weights of the first-class output filter FL31 is calculated. The bias addition process is a process of adding the bias prepared one by one to the one first-class output filter FL31 to the inner product. "Inner product + bias" indicates the correlation value. The calculation of the correlation value is performed at each of a plurality of positions of the first-class output filter FL31 while sliding the first-class output filter FL31. The one first-class output filter FL31 generates bitmap data 931 indicating a correlation value at each of a plurality of positions of the first-class output filter FL31. As will be described later, as the correlation value, a value that restores the feature indicated by the intermediate value of the plurality of pixels corresponding to the first-class output filter FL31 is calculated. Hereinafter, the image 931i represented by the bitmap data 931 is also referred to as a partially restored image. The position of the pixel of the partially restored image 931i indicates the position of the first-class output filter FL31. In this embodiment, the convolution process is performed so that the size of the partially restored image 931i (that is, the number of pixels in the first direction D1 and the number of pixels in the second direction D2) is the same as the size of the intermediate map 930i (that is, W × H). Therefore, the stride (the amount by which the filter is slid) is 1. Also, around the intermediate map 930i, the pixels are supplemented by zero padding.

In this embodiment, one pixel of the partially restored image 931i is associated with the gradation values of r color components in the same manner as the pixels of the input image 910i. In this embodiment, the value r is 3, and one pixel is associated with three, of RGB, gradation values. The first transposed convolution layer 511 calculates r values for each pixel by using r first-class output filters FL31. The bitmap data 931 generated by the first transposed convolution layer 511 is r-color bitmap data.

The transposed convolution layers 511-513 generate bitmap data 931-933, respectively, using the output filters FL31-FL33. The sizes of the three output filters FL31-FL33 are different. The size of the second-class output filter FL32 is the same as the size of the second-class input filter FL12 (p2 × q2), and the size of the third-class output filter FL33 is the same as the size of the third-class input filter FL13 (p3 × q3). The only difference between the transposed convolution layers 511-513 is the difference in filter size. The second translocation convolution layer 512 generates one r-color bitmap data 932 (that is, one r-color partially restored image 932i), and the third translocation convolution layer 513 generates one r-color bitmap data 933 (that is, one r-color partially restored image 933i). All of the output filters FL31-FL33 are smaller than the output image 940i of the output image data 940.

The value of each pixel of the partially restored images 931i-933i generated by the transposed convolution layers 511-513 is greatly influenced by the intermediate value of the portion included in the output filter FL31-FL33 in the intermediate map 930i. As described with reference to FIG. 4, the intermediate value of the intermediate map 930i indicates the feature (including the shape feature) of the object of the input image 910i. Therefore, the partially restored images 931i-931i may indicate the shape feature indicated by the portions corresponding to the output filters FL31-FL33. The first partially restored image 931i may exhibit the small-sized shape feature indicated by the portion corresponding to the small-sized first-class output filter FL31. The second partially restored image 932i may exhibit the medium-sized shape feature indicated by the portion corresponding to the medium-sized second-class output filter FL32. The third partially restored image 933i may exhibit the large-sized shape feature indicated by the portion corresponding to the large-sized third-class output filter FL33. For example, the first transposed convolution layer 511 can restore fine shape feature such as points, the second transpose convolution layer 512 can restore linear features, and the third transpose convolution layer 513 can restore curvilinear features. As described above, the transposed convolution layers 511-513 can restore the shape feature by using the portion of the intermediate data 930 corresponding to the output filters FL31-FL33. The first partially restored image 931i can restore high resolution information. The second partially restored image 932i can restore information at an intermediate resolution. The third partially restored image 933i can restore low resolution information. It should be noted that restoring the fine shape features can be rephrased as restoring high-resolution information. In addition, restoring coarse-shaped features can be rephrased as restoring low-resolution information.

The addition unit 520 generates output image data 940 using the three pieces of bitmap data 931-933 from the transposed convolution layers 511-513. The output image data 940 represents an output image 940i having the same size as the inputted partially restored images 931i-932i. In this embodiment, the addition unit 520 enters the total value of the three values of the three pixels at the same position of the three partially restored images 931i-933i into the activation function, and adopts the calculated value of the activation function as the value of the pixel at the same position of the output image 940i. In this embodiment, a so-called sigmoid function is used as the activation function. The addition unit 520 calculates the pixel value for each of r-color components. In this embodiment, the red R gradation value of the pixel at the same position of the output image 940i is calculated by using the three red R gradation values of the three pixels at the same position of the three partially restored images 931i-933i. The green G gradation value and the blue B gradation value are also calculated in the same manner. The generated output image 940i may indicate the restored shape feature, i.e., label sheets, of various sizes.

The first transposed convolution layer 511 uses a calculation parameter set 605 that includes "p1 × q1 × s × r" weights of r first-class output filter FL31 and r biases corresponding to r first-class output filter FL31. Similarly, the second transposed convolution layer 512 uses a calculation parameter set 606 that includes "p1 × q1 × s × r" weights of r second-class output filters FL32 and r biases. The third transposed convolution layer 513 uses a calculation parameter set 607 that includes "p1 × q1 × s × r" weights of r third-class output filters FL33 and r biases.

### A3. Training process:

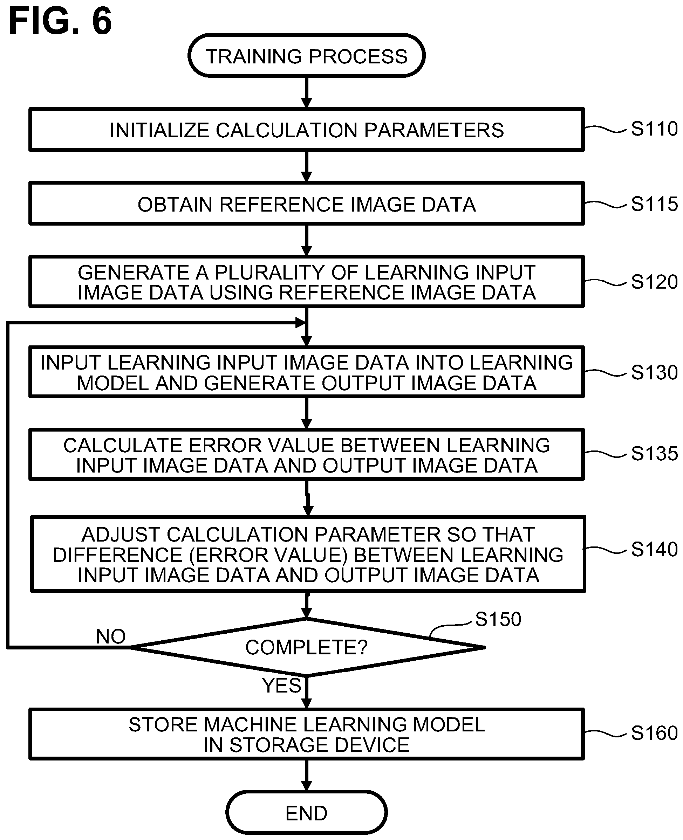

FIG. 6 is a flowchart that shows an example of a training process for generating the learning model 234. In this embodiment, the learning model 234 is trained so that, when the image data of the label sheet 700 is input, the image data of the label sheet without defects is generated. By training, a plurality of calculation parameters including the above calculation parameter sets 601-608 (FIG. 3 - FIG. 5) are adjusted. The training is performed by the data processing device 200 (FIG. 1). In this embodiment, the processor 210 executes the training process according to the first program 232.

In S110, the processor 210 initializes a plurality of calculation parameters (including calculation parameter sets 601-608) of the learning model 234. For example, each calculation parameter is set to a random value.

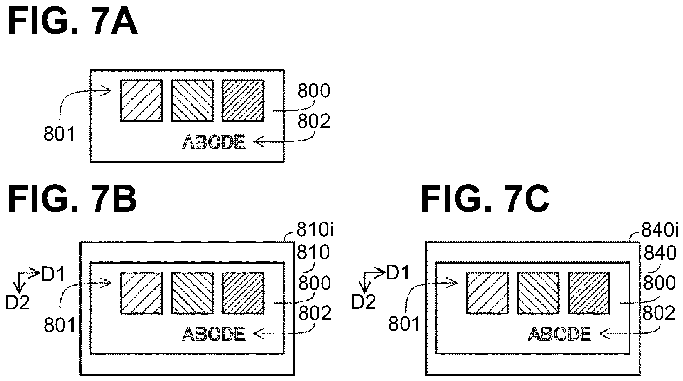

In S115, the processor 210 obtains reference image data. The reference image data is image data of a label sheet without defects (also referred to as a reference label sheet). FIG. 7A is an explanatory view of a reference label sheet 800. A figure 801 and a character string 802 are printed on the reference label sheet 800. FIG. 7B is an explanatory view of an example of reference image data. The reference image data 810 is image data obtained by shooting the reference label sheet 800. In this embodiment, an operator arranges the reference label sheet 800 in a shooting area of the digital camera 100 (FIG. 1). Then, the processor 210 supplies a shooting instruction to the digital camera 100. The digital camera 100 photographs the reference label sheet 800 and generates reference image data in response to the instruction. The processor 210 obtains the reference image data from the digital camera 100 and stores the reference image data in the non-volatile storage device 230. The processor 210 may obtain the reference image data 810 by performing a crop process for cutting out a portion of the image data, indicating the reference label sheet 800, obtained from the digital camera 100.

In S120, the processor 210 generates a plurality of learning input image data using the reference image data 810, and stores the generated plurality of learning input image data in the non-volatile storage device 230. In this embodiment, the plurality of learning input image data is generated by changing a position or an orientation of the reference label sheet 800 in the reference image 810i. Among the plurality of learning input image data, one or more of four parameters, that is, a movement direction, a movement amount, a rotation direction, and a rotation angle, are different from each other. These parameters are changed within an amount of deviation that may occur when obtaining the image data of the label sheet by optically reading the label sheet. In this way, the process of generating a plurality of image data for learning by processing an existing image data is also referred to as "data augmentation". The color may be changed, noise may be added, and smoothing may be performed, regardless of the change of the position or the orientation. In each case, the plurality of learning input image data represents the defect-free reference label sheet 800.

In S130, the processor 210 selects V pieces of learning input image data (V is an integer of 1 or more) from a plurality of learning input image data, inputs V pieces of learning input image data into the learning model 234, and generates V pieces of output image data. As the V pieces of learning input image data, unused learning input image data among the plurality of learning input image data may be selected. Further, V pieces of learning input image data may be randomly selected from the plurality of learning input image data.

In S135, the processor 210 calculates an error value indicating a difference between the learning input image data and the output image data corresponding to the learning input image data, for each of the V pieces of leaning input image data inputted to the learning model 234. The error value is calculated based on a predetermined loss function. For example, a mean squared error (MSE) is used to calculate the error value. The error value becomes smaller as the difference between the learning input image data and the output image data becomes smaller.

In S140, the processor 210 adjusts a plurality of calculation parameters (including the calculation parameter set 601-608) of the learning model 234 using V error values. Specifically, the processor 210 adjusts a plurality of calculation parameters according to a predetermined algorithm so that the error value is small, that is, the difference between the learning input image data and the output image data is small. As the algorithm, for example, an algorithm using a backpropagation method and a gradient descent method is used.

In S150, the processor 210 determines whether the training is complete. The condition for completing the training may be, for example, that all the error values calculated in S135 are smaller than the predetermined error threshold. Instead, the condition for completing the training may be that a completion instruction from an operator has been input. The operator confirms whether or not the image represented by the output image data sufficiently reproduces the image represented by the corresponding learning input image data. The operator inputs a training completion instruction or a continuation instruction via the operation unit 250 according to the confirmation result. Further, the condition for completing the training may be that the number of times the processing of S130-S140 is executed is equal to or greater than a predetermined number of times threshold value.

If it is determined that the training has not been completed (S150: No), the processor 210 proceeds to S130. If it is determined that the training is completed (S150: Yes), in S160, the learning model 234 having the adjusted calculation parameters (that is, the trained learning model 234) is stored in the non-volatile storage device 230. Then, the process of FIG. 6 is completed. The trained learning model 234 is used in the difference data generation process described later.

The trained learning model 234 is configured to cause the computer to function performing processing with the adjusted parameters. As described in FIG. 2 - FIG. 5, the learning model 234 extracts a feature (including shape feature) of the input image object (here, the figure and character string of the label sheet) and restore an image of an object based on the extracted feature. FIG. 7C is an explanatory diagram of an example of output image data generated by the trained learning model 234. The output image data 840 shows an example of image data generated by inputting the image data 810 of FIG. 7B into the trained learning model 234. The output image 840i of the output image data 840 represents a label sheet 800 (including the figure 801 and the character string 802) which is almost the same as the reference label sheet 800 of the image 810i of FIG. 7B. As described above, the learning model 234 is trained using the learning input image data of the defect-free object. In this case, the trained learning model 234 generates output image data representing a defect-free object regardless of whether the object of the input image has defects.

### A4. Difference data generation processing:

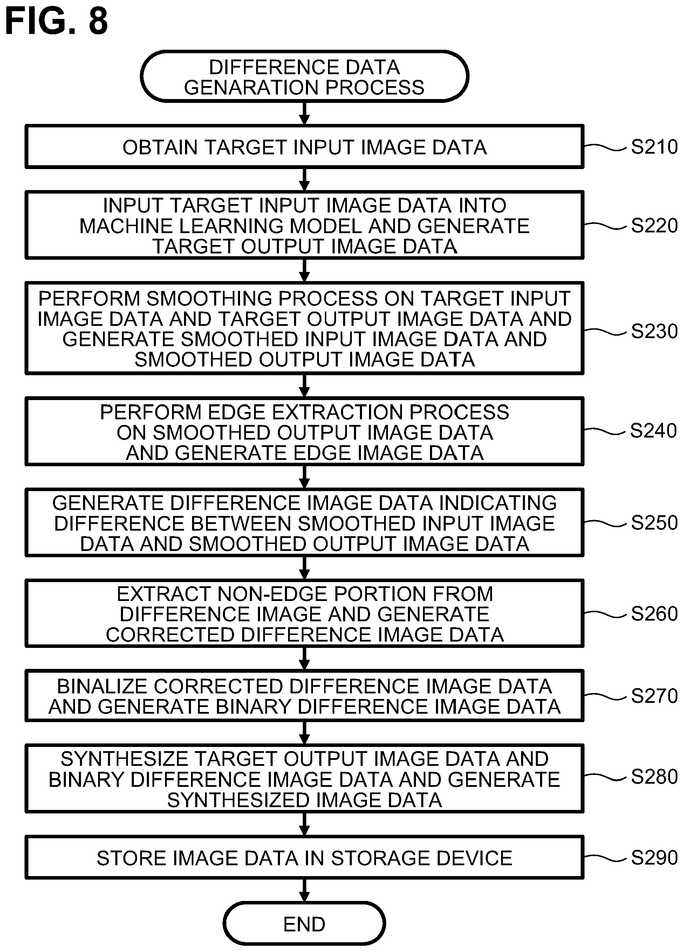

FIG. 8 is a flowchart that shows an example of a difference data generation processing. The difference data can be used to determine if a sample of the label sheet is defective. Generating the difference data is executed by the data processing device 200 (FIG. 1). In this embodiment, the processor 210 executes the difference data generation process according to the second program 233.

In S210, the processor 210 obtains target input image data which is the image data of the sample of the label sheet, and stores the obtained target input image data in the storage device 215 (for example, the non-volatile storage device 230). Obtaining the target input image data 710 is performed by using the digital camera 100 in the same manner as in the process of S115 of FIG. 6

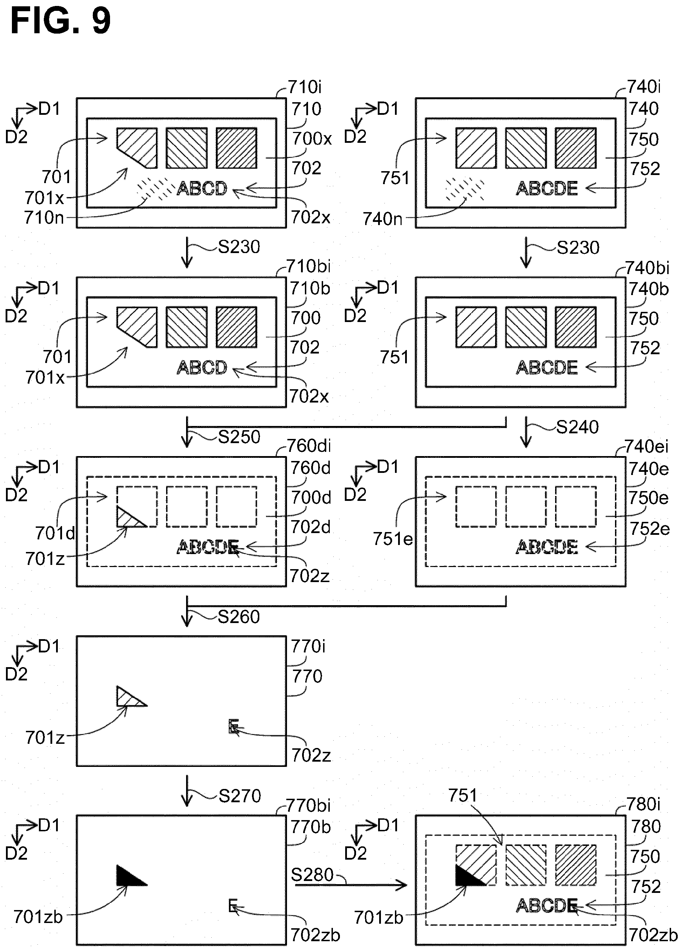

FIG. 9 is an explanatory chart of image processing. In the figure, examples of a plurality of images 710i, 740i, 710bi, 740bi, 760di, 740ei, 770i, 770bi, 780i processed by the difference data generation process are shown. These images are arranged in the order of processing from top to bottom in the figure.

The target input image 710i of the target input image data 710 is shown in the upper left of FIG. 9. The target input image 710i represents a defective label sheet 700x (also referred to as an input label sheet 700x). Specifically, the label sheet 700x has a chip 701x partially in the figure 701 and a chip 702x partially in the character string 702. Further, the target input image 710i contains noise 710n. Noise 710n can be generated by various causes such as data processing in the digital camera 100.

In S220 (FIG. 8), the processor 210 generates target output image data by inputting the target input image data into the trained learning model 234. The target output image 740i of the target output image data 740 is shown in the upper right of FIG. 9. The target output image 740i represents a defect-free label sheet 750 (also referred to as an output label sheet 750). A position and an orientation of the output label sheet 750 in the target output image 740i is approximately the same as a position and an orientation of the input label sheet 700x in the target input image 710i. A figure 751 and a character string 752 of the output label sheet 750 are substantially the same as the figure 801 and the character string 802 of the reference label sheet 800 (FIG. 7A). The target output image 740i contains noise 740n. The noise 740n can be generated by various causes such as calculation by the learning model 234.

In S230 (FIG. 8), the processor 210 performs a smoothing process on the target input image data and the target output image data and generates the smoothed input image data and the smoothed output image data (the smoothing process is also referred to as a blurring process). In this embodiment, the smoothing process is a process using an average value filter. In the second row from the top of FIG. 9, a smoothed input image 710bi of the smoothed input image data 710b and a smoothed output image 740bi of the smoothed output image data 740b are shown. As shown in the figure, noises 710n and 740n have been removed. The smoothing filter may be various other filters such as a median filter and a Gaussian filter. Further, the smoothing process is not limited to the process using the smoothing filter, but may be various processes for a gradual change of the color value (also referred to as the pixel value) of the pixel with respect to the change of the position on the image.

In S240 (FIG. 8), the processor 210 performs edge extraction processing on the smoothed output image data and generates edge image data. In this embodiment, the processor 210 calculates a luminance value from the pixel value (RGB value), applies a known Sobel filter to the luminance value, and calculates the edge amount of each pixel. Then, the processor 210 extracts pixels, as edge pixels, having an edge amount larger than a predetermined threshold value. An edge image 740ei of edge image data 740e is shown on the right side of the third row from the top of FIG. 9. The edge image 740ei includes an edge portion 750e of the output label sheet 750 (for example, a contour), an edge portion 751e of the figure 751 (for example, a pattern of a contour or a figure), and an edge portion 752e of the character string 752 (for example, a contour). In this embodiment, the edge image data 740e is binary bitmap data. A pixel value of zero indicates an edge pixel, and a pixel value of 1 indicates a non-edge pixel. The edge extraction filter may be various other filters such as a Prewitt filter and a Roberts filter. Further, the edge extraction process is not limited to the process using the edge extraction filter, but may be various processes for extracting the pixels of the portion where the pixel value changes rapidly with respect to the change in the position on the image.

In S250 (FIG. 8), the processor 210 generates difference image data indicating a difference between the smoothed input image data and the smoothed output image data. In this embodiment, the difference image data represents a difference image showing a difference between the smoothed input image 710bi and the smoothed output image 740bi. The processor 210 adopts the difference between two color values of two pixels at the same position of the smoothed input image 710b and the smoothed output image 740bi as a color value of a pixel at the same position of the difference image. Specifically, a pixel value of the difference image is set to an absolute value of a difference between a brightness value calculated from the RGB pixel value of the smoothed input image data and a brightness value calculated from the RGB pixel value of the smoothed output image data. A pixel value of zero in the difference image indicates that the difference between the two image data is zero. The larger the pixel value of the difference image is, the larger the difference between the two pieces of image data is. On the left side of the third row from the top of FIG. 9, a difference image 760di of difference image data 760d is shown. As described above, the smoothed input image 710bi has a chip 701x of the figure 701 and a chip 702x of the character string 702. On the other hand, the smoothed output image 740bi does not have such a chip. Therefore, the difference image 760di shows a chipped portion 701z corresponding to the chip 701x of the figure 701 and a chipped portion 702z corresponding to the chip 702x of the character string 702. Further, there may be a difference in the positions of the label sheets 700, 750 in the image between the smoothed input image 710bi and the smoothed output image 740bi. Therefore, the difference image 760di may represent an edge portion 700d of the label sheet, an edge portion 701d of the figure, and an edge portion 702d of the character string. The pixel value of the difference image may be represented by another color component. For example, the pixel value of the difference image may indicate the gradation values of three colors, that is, the absolute value of the difference of red R, the absolute value of the difference of green G, and the absolute value of the difference of blue B.

In S260 (FIG. 8), the processor 210 corrects the difference image data 760d using the edge image data 740e. Specifically, a process of extracting from the difference image 760di a non-edge portion that is different from the edge portion is executed. In this embodiment, the processor 210 refers to the edge image data 740e and generates the corrected difference image data by setting the pixel value of the edge portion of the difference image data 760d to zero. A corrected difference image 770i of a corrected difference image data 770 is shown on the left side of the fourth row from the top of FIG. 9. The corrected difference image 770i shows the chipped portions 701z, 702z. The edge portions 700d, 701d, 702d included in the difference image 760di have been deleted. In this embodiment, a pixel value of zero of the edge image data 740e indicates an edge pixel, and a pixel value of 1 indicates a non-edge pixel. Therefore, the processor 210 can generate the corrected difference image data 770 by multiplying the pixel value of the pixel of the difference image data 760d by the pixel value of the pixel at the same position of the edge image data 740e.

In S270 (FIG. 8), the processor 210 binarizes the corrected difference image data 770 and generates binary difference image data. In this embodiment, the processor 210 performs binarization by comparing the pixel value of the corrected difference image data 770 with a predetermined binarization threshold. On the left side of the bottom row of FIG. 9, the binary difference image 770bi of the binary difference image data 770b is shown. The binary difference image 770bi shows the difference portions 701zb, 702zb corresponding to the chipped portions 701z, 702z of the corrected difference image data 770. The binarization method may be various methods for discriminating between a large value and a small value. For example, the so-called Otsu binarization method, i.e., discriminant analysis method, may be adopted.

In S280 (FIG. 8), the processor 210 synthesizes the target output image data 740 and the binary difference image data 770b and generates synthesized image data. In this embodiment, the processor 210 generates the synthesized image data by changing the color of the difference portion of the target output image to a predetermined specific color (for example, white, red, etc.). The synthesized image 780i of the synthesized image data 780 is shown on the right side at the bottom of FIG. 9. The difference portions 701zb, 702zb of the output label sheet 750 are shown in specific colors.

In S290 (FIG. 8), the processor 210 stores image data indicating the difference portion between the target input image and the target output image in the storage device 215 (for example, the non-volatile storage device 230). In this embodiment, the difference image data (S250), the corrected difference image data (S260), the binary difference image data (S270), and the synthesized image data (S280) indicate the difference portion. All of these four image data are image data obtained by using the difference image data (S250). The image data stored in the storage device in S290 may be one or more image data arbitrarily selected from the above four image data. In this embodiment, the processor 210 stores the binary difference image data and the synthesized image data in the non-volatile storage device 230.

As a result, the process of FIG. 8 is completed. The image data stored in the storage device in S290 can be used in various processes. For example, the processor 210 may display the synthesized image 780i (FIG. 9) on the display unit 240. An observer of the synthesized image 780i can easily identify the difference portions 701zb, 702zb (particularly the position and shape). Further, the processor 210 may determine whether or not the input label sheet 700x has a defect by analyzing the binary difference image data 770b. For example, when the size of one continuous difference portion (for example, the number of pixels) is equal to or larger than a predetermined threshold value, it may be determined that the input label sheet has a defect.

As described above, the learning model 234 of FIG. 2 is a machine learning model that generates the output image data 940 corresponding to the input image data 910 of the input image 910i including the label sheet 700. Then, in the process of FIG. 8, the trained learning model 234 is used. As described with reference to FIGS. 2- 5, the learning model 234 is a model that executes an operation using a plurality of calculation parameters (including a calculation parameter set 601-608) for the input image data 910. As described with reference to FIG. 3, the shape feature of the input object (in this embodiment, the figure 701 and the character string 702 of the label sheet 700) included in the input image 910i of the input image data 910 are extracted by the calculation based on the learning model 234. Then, as described in FIGS. 4 and 5, the output image data 940 of the output image 940i including the output object (label sheet 950 in this embodiment) based on the extracted shape feature is generated by the calculation based on the learning model 234.

As shown in FIG. 2, the learning model 234 includes the input layer L10 that executes an operation using the input image data 910 and the output layer L30 that is provided on the downstream side of the input layer L10 and generates the output image data 940.

As shown in FIG. 3, the input layer L10 includes the convolution layers 311-313, the pooling layers 321, 322, and an addition unit 331. The first convolution layer 311 is an example of the first extraction unit for extracting the shape feature of a portion of the input object (figure 701, character string 702, etc.) that is an object of the input image 910i and is included in the range of the first-class input filter FL11 smaller than the input image 910i. The second convolution layer 312 is provided in parallel with the first convolution layer 311. The second convolution layer 312 is an example of the second extraction unit that extracts the shape feature of the portion of the input object included in the range of the second-class input filter FL12, which is smaller than the input image 910i and larger than the range of the first-class input filter FL11.

The pooling layers 321, 322 generate the bitmap data 914, 915 of the pooling maps 914i, 915i by executing an operation using the data output from the first convolution layer 311. As described with reference to FIG. 3, the pooling maps 914i, 915i can be affected by the position displacement in the input image 910i of the shape feature extracted by the first convolution layer 311. If the position displacement is within the range of windows WN21, WN22, the effect is mitigated. When the position displacement exceeds the range of the windows WN21, WN22, the pooling maps 914i, 915i may change according to the position displacement. As described above, the pooling maps 914i, 915i are examples of displacement information regarding the position displacement. The pooling layers 321, 322 are examples of displacement information obtaining unit that obtains displacement information.

The addition unit 331 adds a plurality of data including data outputted from the first convolution layer 311, data outputted from the second convolution layer 312, and data outputted from the pooling layers 321, 322.

According to the above configuration, the first convolution layer 311 outputs data corresponding to relatively fine shape feature, and the second convolution layer 312 outputs data corresponding to relatively coarse shape feature. For example, the first convolution layer 311 can extract fine shape feature, and the second convolution layer 312 can extract line features. Then, the addition unit 331 of the input layer L10 adds those data. Therefore, the learning model 234 can generate the output image data 940 representing the output object having a relatively fine shape in addition to a relatively coarse shape. Suppose that in the input layer, a plurality of convolution layers using filters of different sizes are not provided in parallel, but a plurality of processing layers (for example, a plurality of convolution layers) are connected in series. In this case, relatively coarse shape feature can be extracted, but it is difficult to extract relatively fine shape feature. According to the above configuration, such a defect can be suppressed.

Further, the target of addition by the addition unit 331 includes data outputted from the pooling layers 321, 322. The pooling layers 321, 322 generate the bitmap data 914, 915 using the data corresponding to the relatively fine shape feature from the first convolution layer 311. With respect to the data 914, 915 outputted from the pooling layers 321, 322, the effect of the position displacement within the range of the windows WN21, WN22 is mitigated. Therefore, robustness can be improved with respect to position displacement in the input image of the relatively fine shape feature.

Further, as described with reference to FIG. 5, the output layer L30 includes the transposed convolution layers 511-513 and the addition unit 520. The first transposed convolution layer 511 is an example of a first restoration unit that restores shape feature by using a portion, of the intermediate data 930 to be processed, that corresponds to the range of the first-class output filter FL31 that is smaller than the output image 940i. The second transposed convolution layer 512 is provided in parallel with the first transposed convolution layer 511. The second transposed convolution layer 512 an example of a second restoration unit that restores the shape feature using a portion, of the intermediate data 930 to be processed, that corresponds to the range of the second-class output filter FL32, which is smaller than the output image 940i and larger than the range of the first-class output filter FL31.

The first transposed convolution layer 511 restores relatively fine shape feature, and the second transpose convolution layer 512 restores relatively coarse shape feature. Therefore, the learning model 234 can generate the output image data 940 representing the output object having a relatively fine shape in addition to a relatively coarse shape.

Further, as described above, the input layer L10 includes the first convolution layer 311 which is an example of the first extraction unit, the second convolution layer 312 which is an example of the second extraction unit, and the pooling layers 321, 322 which is an example of the displacement information obtaining unit. Further, the output layer L30 does not include the pooling layer, but includes the first transposed convolution layer 511 which is an example of the first restoration unit and the second transpose convolution layer 512 which is an example of the second restoration unit. Since the input layer L10 includes the pooling layers 321, 322, the effect of the position displacement of the shape feature in the input image 910i on the calculation by the output layer L30 is mitigated. Therefore, the output layer L30 including the first transposed convolution layer 511 and the second transposed convolution layer 512 without including the pooling layer can generate is the output image data 940 representing an output object having a relatively fine shape in addition to a relatively coarse shape.

Further, as described with reference to FIG. 3, the input layer L10 includes the first pooling layer 321 and the second pooling layer 322. The first pooling layer 321 is an example of a first displacement information obtaining unit that obtains the bitmap data 914 that relates to the position displacement within the range of the first window WN21, which is smaller than the input image 910i. The second pooling layer 322 is provided in parallel with the first pooling layer 321. The second pooling layer 322 is an example of a second displacement information obtaining unit that obtains the bitmap data 915 that relates to the position displacement within the range of the second window WN22, which is smaller than the input image 910i and larger than the range of the first window WN21. Then, the addition unit 331 adds a plurality of data including data outputted from each of the first convolution layer 311 the second convolution layer 312, the first pooling layer 321 and the second pooling layer 322. In this configuration, the first pooling layer 321 obtains the first bitmap data 914 that relates to a relatively small position displacement, and the second pooling layer 322 obtains the second bitmap data 915 that relates to a relatively large position displacement. Then, since the addition unit 331 of the input layer L10 adds those data, the robustness can be improved with respect to the relatively small position displacement and the relatively large position displacement.

Further, the input layer L10 (FIG. 3) includes the third convolution layer 313 provided in parallel with the first convolution layer 311 and the second convolution layer 312. The third convolution layer 313 is an example of a third extraction unit that extracts the shape feature of the portion, of the input object, included in the range of the third-class input filter FL13, which is smaller than the input image 910i and larger than the range of the second-class input filter FL12. Then, the addition unit 331 adds a plurality of data including data outputted from each of the first convolution layer 311, the second convolution layer 312, the third convolution layer 313, the first pooling layer 321 and the second pooling layer 322. In this way, the three-type shape features corresponding to three types of fineness are extracted, and the three types of data corresponding to the three types of features are added, so that the output image data 940 representing the output object having the three-type shape features corresponding to the three types of fineness can be generated.

Further, as described in S140 of FIG. 6, the plurality of calculation parameters (including the calculation parameter set 601-608) of the learning model 234 are adjusted, by training, so that the difference between the learning input image data and the output image data generated by inputting the learning input image data in the learning model 234. As described in S120, the learning input image data is generated by using the reference image data 810 of the reference image 810i including the reference label sheet 800. Each of the plurality of learning input image data is the image data of the reference image including the reference label sheet 800. Therefore, as described with reference to FIGS. 8 and 9, by inputting into the learning model 234 the target input image data 710 of the target input image 710i including the input label sheet 700x, the target output image data 740 of the target output image 740i including the output label sheet 750 that has a small difference from the reference label sheet 800. Such target output image data 740 can be used for detecting defects in the object (here, input label sheet 700x) of the target input image 710i.

Further, in the processes described with reference to FIGS. 8 and 9, the processor 210 performs the following processes using the trained learning model 234. In S210, the processor 210 obtains the target input image data 710 of the target input image 710i including the input object. In S220, the processor 210 inputs the target input image data 710 into the trained learning model 234 and generates the target output image data 740 corresponding to the target input image data 710. In S230 and S250, the processor 210 generates the difference image data 760d of the difference image 760di representing the difference between the target input image 710i and the target output image 740i. The learning model 234 generates the target output image data 740 of the target output image 740i including the output label sheet 750, which is an output label sheet 750 based on the shape feature extracted by the input layer L10 and has a small difference from the reference label sheet 800. Therefore, the processor 210 can generate the difference image data 760d indicating the difference between the input label sheet 700x and the reference label sheet 800.

Further, as described in S230 and S250 (FIG. 8), the processor 210 obtains the smoothed input image data 710b and the smoothed output image data 740b by smoothing the target input image data 710 and the target output image data 740 and generates the difference image data 760d using the smoothed input image data 710b and the smoothed output image data 740b. Therefore, the noise included in the difference image data 760d can be reduced.

Further, as described in S240 and S260 (FIG. 8), the processor 210 performs an edge extraction process for extracting the edge portion in the smoothed output image 740bi of the smoothed output image data 740b (S240) and corrects the difference image data (S260) by performing a process of extracting from the difference image 760di the non-edge portion different from the edge portion on the difference image data 760d. Due to the misalignment of the objects between the target input image 710i and the target output image 740i, the difference image 760di may include edges. According to the above configuration, the corrected difference image data 770 can appropriately indicate a difference that is different from the edge due to the misalignment between the target input image 710i and the target output image 740i.

### B. Modification example:

(1) The input layer of the learning model is not limited to the convolution layers 311-313 (FIG. 3), and various calculation units (also called extraction units) for extracting the shape feature of the input object included in the input image may be provided. The extraction unit uses the pixel values of one or more pixels of the portion included in the input range smaller than the input image of the input image and extracts the shape feature of the portion included in the input range of the input object. The input layer preferably includes a plurality of extraction units using input ranges of different sizes. This allows the input layers to extract the shape feature in different sizes. In other words, the input layer can extract information with different resolutions from each other. The total number of extraction units may be any number of 2 or more. The calculation amount of the learning model is larger as the size (number of pixels) of the input image is larger, and is larger as the total number of extraction units is larger. Therefore, if the size of the input image is large, it is preferable that the total number of extraction units is small.
(2) The pooling layers 321, 322 included in the input layer L10 of the learning model 234 may not perform the max pooling process, and may perform various processes for determining representative values using one or more pixels in the windows WN21, WN22. For example, the pooling layers 321, 322 may perform an average pooling process. Further, the bitmap data 912 from the second convolution layer 312 may be inputted to the pooling layers 321, 322. The bitmap data 912 indicates a finer shape feature as compared with the bitmap data 913 from the third convolution layer 313. Therefore, robustness can be improved with respect to the position displacement in the input image of the relatively fine shape feature.

The data generated by the pooling layers 321, 322 is an example of displacement information regarding the position displacement in the input image of the shape feature extracted by the extraction unit (e.g., convolution layers 311-313). The displacement information may be various information that varies according to the position displacement. The displacement information may be determined so that the effect of the position displacement on the displacement information is small when the position displacement of the object on the input image is within the predetermined displacement range, and the effect of the position displacement on the displacement information is large when the position displacement exceeds the displacement range. That is, the displacement information may be calculated so that, when the difference in the position of the object between the two input images is within the displacement range, the difference between the two displacement information obtained from the two input images is small, and, when the difference between the two displacement information obtained from the two input images exceeds the displacement range, the difference between the two displacement information obtained from the two input images is large. The input layer is not limited to the pooling layer, and may include various calculation units (referred to as displacement information obtaining units) for obtaining displacement information.

The input layer preferably includes a plurality of displacement information obtaining units that use displacement ranges in different sizes. This may improve robustness against displacements in different sizes. The total number of displacement information obtaining units may be any number of 1 or more. When the size of the input image is large, it is preferable that the total number of displacement information obtaining units is small. In any case, it is preferable that the addition unit of the input layer adds data from each of the plurality of extraction units and one or more displacement information obtaining units. This allows the input layer to extract a shape feature of parts of various sizes and improve robustness against misalignment of objects in the input image. Further, one or more displacement information obtaining units may obtain displacement information using the same data from the same extraction unit.

Further, when a plurality of extraction units of the input layer includes a first extraction unit that uses the first input range and a second extraction unit that uses a second input range that is larger than the first input range, it is preferable that the one or more displacement information obtaining unit uses the data from the first extraction unit. As a result, robustness can be improved with respect to the position displacement of a relatively fine shape feature. Here, the input layer does not have to include a displacement information obtaining unit that uses data from the second extraction unit. As a result, the configuration of the input layer can be simplified.

(3) The output layer of the learning model is not limited to the transposed convolution layers 511-513 (FIG. 5), and may include various calculation units (also referred to as restoration units) that restore the shape feature. The restoration unit may process processing target data indicating the feature of the object (including the shape feature) as image data. Then, the restoration unit is configured to restore the shape feature by using the pixel values of one or more pixels of the portion of the image indicated by the processing target data that is included in the output range smaller than the output image. The output layer preferably includes a plurality of restoration units using output ranges in different sizes. This allows the output layers to restore the shape feature in different sizes. In other words, the output layers can restore information with different resolutions from each other. Here, it is preferable that a plurality of restoration units is provided in parallel to process the same data to be processed, and the output layer includes the addition unit that adds data outputted from each of the plurality of restoration units. Then, the data outputted from the addition unit may be used as the output image data. Thereby, shape features having different sizes can be appropriately restored. Here, the output layer does not have to include a pooling layer (and thus a displacement information obtaining unit).

The total number of restoration units may be any number of 1 or more, and is preferably 2 or more. When the size of the input image is large, it is preferable that the total number of restoration units is small. The size of the output range of the restoration unit of the output layer may be different from the size of the input range of the extraction unit of the input layer. The total number of restoration units in the output layer may be different from the total number of extraction units in the input layer. However, it is preferable that the input layer includes U (U is an integer of 2 or more) extraction units using input ranges in different sizes, the output layer includes U restoration units using output ranges in different sizes, and the size of the U input ranges is the same as the size of the U output ranges. As a result, it is possible to appropriately extract and restore a plurality of types of shape feature having a plurality of sizes different from each other.

(4) In the learning model 234 of FIGS. 2-5, the fully connected layers 415, 420 (FIG. 4) transmits information from the addition unit 331 of the input layer L10 (FIG. 3) to the restoration unit (specifically, the transposed convolution layers 511-513) of the output layer L30 (FIG. 5). The fully connected layers 415, 420 can transmit information while suppressing the loss of information. Therefore, the information indicating the shape feature in various sizes extracted by the input layer L10 is transmitted to the output layer L30. As a result, the output layer L30 can restore the shape feature in various sizes.

The structure of the intermediate layer connecting the addition unit of the input layer and the restoration unit of the output layer is not limited to the fully connected layers 415, 420, and may be various configurations. Here, it is preferable that the intermediate layer transmits information while suppressing the loss of information. For example, the intermediate layer may include a plurality of fully connected layers, each connected in series. Further, the intermediate layer may be omitted. In this case, the data from the addition unit of the input layer is input to the restoration unit of the output layer.

(5) The configuration of the learning model may be various other configurations instead of the above configurations. The number s of channels may be any number of 1 or more. As the number s of channels increases, it is possible to extract and restore various shape features. The smaller the number s of channels, the easier it is to train the learning model. The number r of color components may be any number of 1 or more. The color component may be any color component such as grayscale, RGB, YCbCr, and CMYK. When r = 1, the learning model may process grayscale bitmap data.

Further, the learning model may be various models for extracting and restoring the shape feature of the object of the input image, instead of the model of FIGS. 2-5. For example, the learning model may be a model called Variational Autoencoder (VAE). VAE is a model that compresses input image data into parameters of a multidimensional normal distribution (mean value and variance value). When VAE is adopted, it is possible to extract and restore the finer shape features. When VAE is adopted, the configuration of the intermediate layer may be various configurations that process the parameters of the normal distribution, similar to the known VAE intermediate layer. For example, N feature values (N is an even number) output from the first fully connected layer 415 in FIG. 4 may indicate parameters of a normal distribution.

In each case, the learning model is trained in a manner suitable for the learning model. it is preferable that the plurality of calculation parameters of the learning model is adjusted so that difference between the reference image data of the reference image including the reference object (for example, the reference label sheet 800) and the output image data generated by inputting the reference image data into the learning model. Further, it is preferable that the plurality of calculation parameters is adjusted by using a plurality of reference image data of a plurality of reference images including the reference object. Here, it is preferable that at least one of the position and orientation of the reference object is different from each other among the plurality of reference images. According to this configuration, the learning model can appropriately process various input image data.

(6) The difference data generation process may be various other processes instead of the process shown in FIG. 8. For example, the smoothing process (S230) may be omitted. In this case, in S250, difference image data indicating the difference between the target input image data 710 and the target output image data 740 is generated. Further, the edge extraction process (S240) and the difference image data correction process (S260) may be omitted. In this case, in S270, the uncorrected difference image data (for example, the difference image data 760d) is binarized. The difference image may be an image indicating the difference of pixel values in each of the plurality of pixels. Differences of pixel values may be represented by various color components (e.g., RGB, luminance values, YCbCr, etc.).

(7) In the embodiment of FIG. 8, the data processing device 200 operates as a generation device for generating difference image data. Instead of this, the data processing device 200 may operate as a generation device that generates output image data by inputting the input image data into the training model without generating the difference image data. The processor 210 may store the generated output image data in the storage device 215 (for example, the non-volatile storage device 230). The output image data can be used in various processes (for example, displaying output image, generating difference image data, etc.).

(8) The configuration of the image processing system 1000 may be various other configurations instead of the configuration shown in FIG. 1. For example, a data processing device that is different from the data processing device that executes the training of FIG. 6 may execute the processing of FIG. 8. Further, a scanner may be used instead of the digital camera 100. Further, the product 700 is not limited to a label sheet, and may be any product such as a paper product such as a box or an envelope for accommodating a product, a cloth product such as a shirt or a towel, or a machine part.

(9) The data processing device 200 of FIG. 1 may be a type of device (for example, a digital camera, a scanner, a smartphone) that is different from a personal computer. Further, a plurality of devices (for example, a computer) capable of communicating with each other via a network may partially share the data processing function of the data processing device and provide the data processing function as a whole (A system equipped with these devices corresponds to a data processing device).

In each of the above embodiments, a part of the configuration implemented by the hardware may be replaced with software, and conversely, a part or all of the configuration implemented by the software may be replaced with the hardware. For example, the learning model 234 may be realized by a hardware circuit such as an ASIC (Application Specific Integrated Circuit) instead of the program module.

Further, when a part or all of the functions of the present invention are implemented by a computer program, the program is provided in a form stored in a computer-readable recording medium (for example, a non-transitory recording medium). The program may be used while being stored on the same or different recording medium (computer-readable recording medium) as it was supplied. The "computer-readable recording medium" is not limited to a portable recording medium such as a memory card or a CD-ROM, but may include an internal storage device, such as various ROMs, in the computer or an external storage device, such as a hard disk drive, connected to a computer.

### Explanation of Reference numerals

100 ... digital camera, 200 ... data processing device, 210 ... processor, 215 ... storage device, 220 ... volatile storage device, 230 ... non-volatile storage device, 232 ... first program, 233 ... second program, 234 ... prediction model (machine learning model), L10 ... input layer, L20 ... intermediate layer, L30 ... output layer, 240 ... display unit, 250 ... operation unit, 270 ... communication interface, 311-313 ... convolution layer, 321 ... first pooling layer 322 ... second pooling layer, 331 ... addition unit, 410 ... first conversion unit, 420 ... fully connected layer, 430 ... second conversion unit, 511-513 ... transposed convolution layer, 520 ... Addition unit, 601-608 ... calculation parameter set, 700, 700x, 750, 800, 950 ... label sheet, 701 ...figure, 702 ... character string, 701z, 702z ... chipped portion, 701zb, 702zb ... difference portion, FL11-FL13 ... input filter, WN21 ... first window, WN22 ... second window, FL31-FL33 ... output filter

## Claims

1. A computer program for a computer that generates image data that causes a computer to perform:
an output image data generation function that generates output image data (940, 840) corresponding to the input image data (910, 810) of an input image (910i, 810i) including an input object (701, 702, 801, 802) by inputting the input image data into a trained machine learning model, wherein
the machine learning model performs extracting a shape feature of the input object included in the input image of the input image data and generating the output image data of an output image (940i, 840i) including an output object (950) based on the extracted shape feature, by executing an operation using a plurality of calculation parameters on the input image data, the machine learning model comprising:
an input layer (L10) that executes an operation using the input image data; and
an output layer (L30) that is provided on the downstream side of the input layer and generates the output image data,
wherein the input layer comprises:
a first extraction unit (311) that extracts a shape feature of a portion included in a first input range, that is smaller than the input image, in the input object,
a second extraction unit (312), provided in parallel with the first extraction unit, that extracts a shape feature of a portion included in a second input range, that is smaller than the input image and larger than the first input range, in the input object,
one or more displacement information obtaining unit (321, 322) that obtains displacement information that relates to position displacement of the shape feature, in the input image, extracted by the first extraction unit, by executing an operation using data outputted from the first extraction unit; and
an addition unit (331) that adds a plurality of data including data outputted from the first extraction unit, data outputted from the second extraction unit, and data outputted from the one or more displacement information acquisition units,
wherein the output layer comprises:
a first restoration unit (511) that restores the shape feature by using a portion corresponding to the first output range, that is smaller than the output image, in the data to be processed; and
a second restoration unit (512), that is provided in parallel with the first restoration unit, that restores the shape feature by using a portion corresponding to the second output range, that is smaller than the output image and larger than the first output range, in the data to be processed;
wherein
the input layer includes the first extraction unit which is a convolution layer, the second extraction unit which is a convolution layer, and the displacement information acquisition unit which is a pooling layer, and
the output layer does not include the pooling layer, and includes the first restoration unit which is a transposed convolution layer and the second restoration unit which is a translocation convolution layer; and
wherein the plurality of calculation parameters is adjusted, by training, so that the difference between reference image data of a reference image including a reference object without defects and output image data generated by inputting the reference image data into the machine learning model is smaller than a predetermined error threshold.

2. The computer program according to claim 1, wherein
the one or more displacement information obtaining unit comprises:
a first displacement information obtaining unit (321) that obtains first displacement information that relates to position displacement within a first displacement range smaller than the input image; and
a second displacement information obtaining unit (322), that is provided in parallel with the first displacement information acquisition unit, that obtains second displacement information that relates to position displacement within a second displacement range that is smaller than the input image and larger than the first displacement range, and
the addition unit adds the plurality of data including the data outputted from the first extraction unit, the data outputted from the second extraction unit, the data outputted from the first displacement information obtaining unit, and the data outputted from the second displacement information obtaining unit.

3. The computer program according to either one of claims 1 or 2, wherein
the input layer comprises:
a third extraction unit (313), that is provided in parallel with the first extraction unit and the second extraction unit, that extracts the shape feature of the portion included in a third input range that is smaller than the input image and larger than the second input range of the input object, and
the addition unit adds the plurality of data including the data outputted from the first extraction unit, the data outputted from the second extraction unit, the data outputted from the third extraction unit, and the data outputted from the one or more displacement information obtaining unit.

4. The computer program according to claim 1 that causes a computer to perform:
an obtaining function for obtaining input image data of the input image including the input object, and
a difference image data generation function that generates difference image data of the difference image representing the difference between the input image and the output image of the output image data.

5. The computer program according to claim 4,
wherein the difference image data generation unit
obtains smoothed input image data by performing a smoothing process on the input image data,
obtains smoothed output image data by performing a smoothing process on the output image data, and
generates the difference image data by using the smoothed input image data and the smoothed output image data.

6. The computer program according to claim 5,
wherein the difference image data generation unit
performs an edge extraction process for extracting an edge portion in the image of the smoothed output image data, and
corrects the difference image data by performing on the difference image data a process of extracting from the difference image a non-edge portion that is different from the edge portion.

7. The computer program according to any one of the preceding claims, wherein the input image data is image data of an appearance of a product, wherein the product is:
(i) a label sheet (700) on which various objects such as characters and figures are printed; or
(ii) a paper product, preferably a box or an envelope; or
(iii) a cloth product, preferably a shirt or a towel; or
(iv) a machine part.

8. A generation device (200), for generating image data, comprising:
an obtaining unit that obtains input image data (910, 810) of an input image (910i, 810i) including an input object (701, 702, 801, 802); and
an output image data generation unit that generates output image data (940, 840) corresponding to the input image data by inputting the input image data into a trained machine learning model,
wherein
the machine learning model performs extracting a shape feature of the input object included in the input image of the input image data, and generating the output image data of the output image (940i, 840i) including the output object (950) based on the extracted shape feature, by executing an operation using a plurality of calculation parameters on the input image data,
the machine learning model comprises:
an input layer (L10) that executes an operation using the input image data; and
an output layer (L30) that is provided on the downstream side of the input layer and generates the output image data,
the input layer comprises:
a first extraction unit (311) that extracts a shape feature of a portion included in a first input range, that is smaller than the input image, in the input object;
a second extraction unit (312) that is provided in parallel with the first extraction unit, that extracts a shape feature of a portion included in a second input range, that is smaller than the input image and larger than the first input range, in the input object;
one or more displacement information obtaining unit (321, 322) that obtains displacement information that relates to position displacement of the shape feature, in the input image, extracted by the first extraction unit in the input image, by executing an operation using the data output from the first extraction unit; and
an addition unit (331) that adds a plurality of data including data outputted from the first extraction unit, data outputted from the second extraction unit, and data outputted from the one or more displacement information acquisition units,
wherein the output layer comprises:
a first restoration unit (511) that restores the shape feature by using a portion corresponding to the first output range, that is smaller than the output image, in the data to be processed; and
a second restoration unit (512), that is provided in parallel with the first restoration unit, that restores the shape feature by using a portion corresponding to the second output range, that is smaller than the output image and larger than the first output range, in the data to be processed;
wherein
the input layer includes the first extraction unit which is a convolution layer, the second extraction unit which is a convolution layer, and the displacement information acquisition unit which is a pooling layer, and
the output layer does not include the pooling layer, and includes the first restoration unit which is a transposed convolution layer and the second restoration unit which is a translocation convolution layer, and
wherein the plurality of calculation parameters is adjusted, by training, so that the difference between reference image data of a reference image including a reference object without defects and output image data generated by inputting the reference image data into the machine learning model is smaller than a predetermined error threshold.

9. The generation device according to claim 8, comprising a difference image data generation unit that generates difference image data of the difference image representing difference between the output image data of the output image data and the input image data.

10. The generation device according to claim 9,
wherein the difference image data generation unit
obtains smoothed input image data by performing a smoothing process on the input image data,
obtains smoothed output image data by performing a smoothing process on the output image data, and
generates the difference image data by using the smoothed input image data and the smoothed output image data.

11. The generation device according to claim 10,
wherein the difference image data generation unit
performs an edge extraction process for extracting an edge portion in the image of the smoothed output image data, and
corrects the difference image data by performing on the difference image data a process of extracting from the difference image a non-edge portion that is different from the edge portion.

12. The generation device according to any one of claims 8-11, wherein the input image data is image data of an appearance of a product, wherein the product is:
(i) a label sheet (700) on which various objects such as characters and figures are printed; or
(ii) a paper product, preferably a box or an envelope; or
(iii) a cloth product, preferably a shirt or a towel; or
(iv) a machine part.

## Patentansprüche

1. Computerprogramm für einen Computer, das Bilddaten erzeugt, das verursacht, dass ein Computer Folgendes durchführt:
eine Ausgangsbilddaten-Erzeugungsfunktion, die Ausgangsbilddaten (940, 840) entsprechend den Eingangsbilddaten (910, 810) eines Eingangsbilds (910i, 810i) einschließlich eines Eingangsobjekts (701, 702, 801, 802) durch Eingeben der Eingangsbilddaten in ein trainiertes Machine-Learning-Modell erzeugt, wobei
das Machine-Learning-Modell das Extrahieren eines Shape Features des Eingangsobjekts, das im Eingangsbild der Eingangsbilddaten beinhaltet ist, und das Erzeugen der Ausgangsbilddaten eines Ausgangsbilds (940i, 840i) einschließlich eines Ausgangsobjekts (950) basierend auf dem extrahierten Shape Feature durchführt, durch Ausführen eines Vorgangs unter Verwendung einer Vielzahl von Berechnungsparametern auf den Eingangsbilddaten, wobei das Machine-Learning-Modell Folgendes umfasst:
eine Eingangsschicht (L10), die einen Vorgang ausführt unter Verwendung der Eingangsbilddaten; und
eine Ausgangsschicht (L30), die auf der stromabwärtigen Seite der Eingangsschicht bereitgestellt ist und die Ausgangsbilddaten erzeugt,
wobei die Eingangsschicht Folgendes umfasst:
eine erste Extraktionseinheit (311), die ein Shape Feature eines Abschnitts extrahiert, der in einem ersten Eingabebereich beinhaltet ist, der kleiner als das Eingangsbild ist, im Eingangsobjekt,
eine zweite Extraktionseinheit (312), die parallel zur ersten Extraktionseinheit bereitgestellt ist, die ein Shape Feature eines Abschnitts extrahiert, der in einem zweiten Eingabebereich beinhaltet ist, der kleiner als das Eingangsbild ist und größer als der erste Eingabebereich ist, im Eingangsobjekt,
eine oder mehrere Verschiebungsinformationen-Erlangungseinheit (321, 322), die Verschiebungsinformationen erlangt, die sich auf Positionsverschiebung des Shape Features beziehen, im Eingangsbild, extrahiert durch die erste Extraktionseinheit, durch Ausführen eines Vorgangs unter Verwendung von Daten, die von der ersten Extraktionseinheit ausgegeben werden; und
eine Hinzugabeeinheit (331), die eine Vielzahl von Daten hinzugibt, einschließlich Daten, die von der ersten Extraktionseinheit ausgegeben werden, Daten, die von der zweiten Extraktionseinheit ausgegeben werden, und Daten, die von der einen oder den mehreren Verschiebungsinformationen-Erfassungseinheiten ausgegeben werden,
wobei die Ausgangsschicht Folgendes umfasst:
eine erste Wiederherstellungseinheit (511), die das Shape Feature wiederherstellt durch Verwenden eines Abschnitts, der dem ersten Ausgabebereich entspricht, der kleiner als das Ausgangsbild ist, in den Daten, die verarbeitet werden sollen; und
eine zweite Wiederherstellungseinheit (512), die parallel mit der ersten Wiederherstellungseinheit bereitgestellt ist, die das Shape Feature wiederherstellt durch Verwenden eines Abschnitts, der dem zweiten Ausgabebereich entspricht, der kleiner als das Ausgangsbild ist und größer als der erste Ausgabebereich ist, in den Daten, die verarbeitet werden sollen;
wobei
die Eingangsschicht die erste Extraktionseinheit, die eine Konvolutionsschicht ist, die zweite Extraktionseinheit, die eine Konvolutionsschicht ist, und die Verschiebungsinformationen-Erfassungseinheit beinhaltet, die eine Pooling-Schicht ist, und
die Ausgangsschicht die Pooling-Schicht nicht beinhaltet und die erste Wiederherstellungseinheit, die eine transponierte Konvolutionsschicht ist, und die zweite Wiederherstellungseinheit beinhaltet, die eine Translokationskonvolutionsschicht ist; und
wobei die Vielzahl von Berechnungsparametern angepasst ist, durch Training, sodass die Differenz zwischen Referenzbilddaten eines Referenzbilds einschließlich eines Referenzobjekts ohne Mängel und Ausgangsbilddaten, erzeugt durch Eingeben der Referenzbilddaten in das Machine-Learning-Modell kleiner als ein vorbestimmter Fehlerschwellenwert ist.

2. Computerprogramm nach Anspruch 1, wobei die eine oder mehreren Verschiebungsinformationen-Erlangungseinheit Folgendes umfasst:
eine erste Verschiebungsinformationen-Erlangungseinheit (321), die erste Verschiebungsinformationen erlangt, die sich auf Positionsverschiebung in einem ersten Verschiebungsbereich beziehen, der kleiner als das Eingangsbild ist; und
eine zweite Verschiebungsinformationen-Erlangungseinheit (322), die parallel zu der ersten Verschiebungsinformationen-Erfassungseinheit bereitgestellt ist, die zweite Verschiebungsinformationen erhält, die sich auf Positionsverschiebung in einem zweiten Verschiebungsbereich beziehen, der kleiner als das Eingangsbild ist und größer als der erste Verschiebungsbereich ist, und
die Hinzugabeeinheit die Vielzahl von Daten hinzugibt, einschließlich der Daten, die von der ersten Extraktionseinheit ausgegeben werden, der Daten, die von der zweiten Extraktionseinheit ausgegeben werden, der Daten, die von der ersten Verschiebungsinformationen-Erlangungseinheiten ausgegeben werden, und der Daten, die von der zweiten Verschiebungsinformationen-Erlangungseinheiten ausgegeben werden.

3. Computerprogramm nach einem der Ansprüche 1 oder 2, wobei die Eingangsschicht Folgendes umfasst:
eine dritte Extraktionseinheit (313), die parallel zu der ersten Extraktionseinheit und der zweiten Extraktionseinheit bereitgestellt ist, die das Shape Feature des Abschnitts extrahiert, der in einem dritten Eingabebereich beinhaltet ist, der kleiner als das Eingangsbild ist und größer als der zweite Eingabebereich des Eingangsobjekts ist, und
die Hinzugabeeinheit die Vielzahl von Daten hinzugibt, einschließlich der Daten, die von der ersten Extraktionseinheit ausgegeben werden, der Daten, die von der zweiten Extraktionseinheit ausgegeben werden, der Daten, die von der dritten Extraktionseinheit ausgegeben werden, und der Daten, die von der einen oder den mehreren Verschiebungsinformationen-Erlangungseinheit ausgegeben werden.

4. Computerprogramm nach Anspruch 1, das verursacht, dass ein Computer Folgendes durchführt:
eine Erlangungsfunktion zum Erlangen von Eingangsbilddaten des Eingangsbilds einschließlich des Eingangsobjekts, und
eine Differenzbilddaten-Erzeugungsfunktion, die Differenzbilddaten des Differenzbilds erzeugt, was die Differenz zwischen dem Eingangsbild und dem Ausgangsbild der Ausgangsbilddaten darstellt.

5. Computerprogramm nach Anspruch 4,
wobei die Differenzbilddaten-Erzeugungseinheit
geglättete Eingangsbilddaten erlangt, durch Durchführen eines Glättungsprozesses an den Eingangsbilddaten,
geglättete Ausgangsbilddaten erlangt, durch Durchführen eines Glättungsprozesses an den Ausgangsbilddaten, und
die Differenzbilddaten erzeugt durch Verwenden der geglätteten Eingangsbilddaten und der geglätteten Ausgangsbilddaten.

6. Computerprogramm nach Anspruch 5,
wobei die Differenzbilddaten-Erzeugungseinheit
einen Kantenextraktionsprozess zum Extrahieren eines Kantenabschnitts im Bild der geglätteten Ausgangsbilddaten durchführt und
die Differenzbilddaten durch Durchführen, an den Differenzbilddaten, eines Prozesses des Extrahierens aus dem Differenzbild eines Nichtkantenabschnitts korrigiert, der anders als der Kantenabschnitt ist.

7. Computerprogramm nach einem der vorhergehenden Ansprüche, wobei die Eingangsbilddaten Bilddaten eines Erscheinungsbilds eines Produkts sind, wobei das Produkt Folgendes ist:
(i) ein Etikettenbogen (700), auf dem verschiedene Objekte, wie z. B. Zeichen und Figuren, gedruckt sind; oder
(ii) ein Papierprodukt, bevorzugt eine Schachtel oder ein Umschlag; oder
(iii) ein Stoffprodukt, bevorzugt ein Shirt oder ein Handtuch; oder
(iv) ein Maschinenteil.

8. Erzeugungsvorrichtung (200) zum Erzeugen von Bilddaten, umfassend:
eine Erlangungseinheit, die Eingangsbilddaten (910, 810) eines Eingangsbilds (910i, 810i) einschließlich eines Eingangsobjekts (701, 702, 801, 802) erlangt; und
eine Ausgangsbilddaten-Erzeugungseinheit, die Ausgangsbilddaten (940, 840) entsprechend den Eingangsbilddaten erzeugt, durch Eingeben der Eingangsbilddaten in ein trainiertes Machine-Learning-Modell,
wobei
das Machine-Learning-Modell das Extrahieren eines Shape Features des Eingangsobjekts, das im Eingangsbild der Eingangsbilddaten beinhaltet ist, und das Erzeugen der Ausgangsbilddaten eines Ausgangsbilds (940i, 840i) einschließlich eines Ausgangsobjekts (950) basierend auf dem extrahierten Shape Feature durchführt, durch Ausführen eines Vorgangs unter Verwendung einer Vielzahl von Berechnungsparametern auf den Eingangsbilddaten,
das Machine-Learning-Modell Folgendes umfasst:
eine Eingangsschicht (L10), die einen Vorgang ausführt unter Verwendung der Eingangsbilddaten; und
eine Ausgangsschicht (L30), die auf der stromabwärtigen Seite der Eingangsschicht bereitgestellt ist und die Ausgangsbilddaten erzeugt,
wobei die Eingangsschicht Folgendes umfasst:
eine erste Extraktionseinheit (311), die ein Shape Feature eines Abschnitts extrahiert, der in einem ersten Eingabebereich beinhaltet ist, der kleiner als das Eingangsbild ist, im Eingangsobjekt;
eine zweite Extraktionseinheit (312), die parallel zur ersten Extraktionseinheit bereitgestellt ist, die ein Shape Feature eines Abschnitts extrahiert, der in einem zweiten Eingabebereich beinhaltet ist, der kleiner als das Eingangsbild ist und größer als der erste Eingabebereich ist, im Eingangsobjekt;
eine oder mehrere Verschiebungsinformationen-Erlangungseinheit (321, 322), die Verschiebungsinformationen erlangt, die sich auf Positionsverschiebung des Shape Features beziehen, im Eingangsbild, extrahiert durch die erste Extraktionseinheit im Eingangsbild, durch Ausführen eines Vorgangs unter Verwendung der Daten, die von der ersten Extraktionseinheit ausgegeben werden; und
eine Hinzugabeeinheit (331), die eine Vielzahl von Daten hinzugibt, einschließlich Daten, die von der ersten Extraktionseinheit ausgegeben werden, Daten, die von der zweiten Extraktionseinheit ausgegeben werden, und Daten, die von der einen oder den mehreren Verschiebungsinformationen- Erfassungseinheiten ausgegeben werden,
wobei die Ausgangsschicht Folgendes umfasst:
eine erste Wiederherstellungseinheit (511), die das Shape Feature wiederherstellt durch Verwenden eines Abschnitts, der dem ersten Ausgabebereich entspricht, der kleiner als das Ausgangsbild ist, in den Daten, die verarbeitet werden sollen; und
eine zweite Wiederherstellungseinheit (512), die parallel mit der ersten Wiederherstellungseinheit bereitgestellt ist, die das Shape Feature wiederherstellt durch Verwenden eines Abschnitts, der dem zweiten Ausgabebereich entspricht, der kleiner als das Ausgangsbild ist und größer als der erste Ausgabebereich ist, in den Daten, die verarbeitet werden sollen;
wobei
die Eingangsschicht die erste Extraktionseinheit, die eine Konvolutionsschicht ist, die zweite Extraktionseinheit, die eine Konvolutionsschicht ist, und die Verschiebungsinformationen- Erfassungseinheit beinhaltet, die eine Pooling-Schicht ist, und
die Ausgangsschicht die Pooling-Schicht nicht beinhaltet und die erste Wiederherstellungseinheit, die eine transponierte Konvolutionsschicht ist, und die zweite Wiederherstellungseinheit beinhaltet, die eine Translokationskonvolutionsschicht ist; und
wobei die Vielzahl von Berechnungsparametern angepasst ist, durch Training, sodass die Differenz zwischen Referenzbilddaten eines Referenzbilds einschließlich eines Referenzobjekts ohne Mängel und Ausgangsbilddaten, erzeugt durch Eingeben der Referenzbilddaten in das Machine-Learning-Modell kleiner als ein vorbestimmter Fehlerschwellenwert ist.

9. Erzeugungsvorrichtung nach Anspruch 8, umfassend eine Differenzbilddaten-Erzeugungseinheit, die Differenzbilddaten des Differenzbilds erzeugt, was die Differenz zwischen den Ausgangsbilddaten der Ausgangsbilddaten und der Eingangsbilddaten darstellt.

10. Erzeugungsvorrichtung nach Anspruch 9,
wobei die Differenzbilddaten-Erzeugungseinheit
geglättete Eingangsbilddaten erlangt, durch Durchführen eines Glättungsprozesses an den Eingangsbilddaten,
geglättete Ausgangsbilddaten erlangt, durch Durchführen eines Glättungsprozesses an den Ausgangsbilddaten, und
die Differenzbilddaten erzeugt durch Verwenden der geglätteten Eingangsbilddaten und der geglätteten Ausgangsbilddaten.

11. Erzeugungsvorrichtung nach Anspruch 10,
wobei die Differenzbilddaten-Erzeugungseinheit
einen Kantenextraktionsprozess zum Extrahieren eines Kantenabschnitts im Bild der geglätteten Ausgangsbilddaten durchführt und
die Differenzbilddaten durch Durchführen, an den Differenzbilddaten, eines Prozesses des Extrahierens aus dem Differenzbild eines Nichtkantenabschnitts korrigiert, der anders als der Kantenabschnitt ist,

12. Erzeugungsvorrichtung nach einem der Ansprüche 8-11, wobei die Eingangsbilddaten Bilddaten eines Erscheinungsbilds eines Produkts sind, wobei das Produkt Folgendes ist:
(i) ein Etikettenbogen (700), auf dem verschiedene Objekte, wie z. B. Zeichen und Figuren, gedruckt sind; oder
(ii) ein Papierprodukt, bevorzugt eine Schachtel oder ein Umschlag; oder
(iii) ein Stoffprodukt, bevorzugt ein Shirt oder ein Handtuch; oder
(iv) ein Maschinenteil.

## Revendications

1. Programme d'ordinateur, pour un ordinateur qui génère des données d'image, qui amène un ordinateur à réaliser :
une fonction de génération de données d'image de sortie qui génère des données d'image de sortie (940, 840) correspondant aux données d'image d'entrée (910, 810) d'une image d'entrée (910i, 810i) incluant un objet d'entrée (701, 702, 801, 802) en entrant les données d'image d'entrée dans un modèle d'apprentissage machine entraîné, dans lequel
le modèle d'apprentissage machine réalise l'extraction d'une caractéristique de forme de l'objet d'entrée inclus dans l'image d'entrée des données d'image d'entrée et la génération des données d'image de sortie d'une image de sortie (940i, 840i) incluant un objet de sortie (950) sur la base de la caractéristique de forme extraite, en exécutant une opération en utilisant une pluralité de paramètres de calcul sur les données d'image d'entrée, le modèle d'apprentissage machine comprenant :
une couche d'entrée (L10) qui exécute une opération en utilisant les données d'image d'entrée ; et
une couche de sortie (L30) qui est prévue sur le côté aval de la couche d'entrée et génère les données d'image de sortie,
dans lequel la couche d'entrée comprend :
une première unité d'extraction (311) qui extrait une caractéristique de forme d'une partie incluse dans une première étendue d'entrée, qui est plus petite que l'image d'entrée, dans l'objet d'entrée,
une deuxième unité d'extraction (312), prévue en parallèle avec la première unité d'extraction, qui extrait une caractéristique de forme d'une partie incluse dans une deuxième étendue d'entrée, qui est plus petite que l'image d'entrée et plus grande que la première étendue d'entrée, dans l'objet d'entrée,
une ou plusieurs unités d'obtention d'informations de déplacement (321, 322) qui obtiennent des informations de déplacement qui concernent un déplacement de position de la caractéristique de forme, dans l'image d'entrée, extraite par la première unité d'extraction, en exécutant une opération en utilisant des données sorties en provenance de la première unité d'extraction ; et
une unité d'addition (331) qui additionne une pluralité de données incluant des données sorties en provenance de la première unité d'extraction, des données sorties en provenance de la deuxième unité d'extraction, et des données sorties en provenance de l'une ou des plusieurs unités d'acquisition d'informations de déplacement,
dans lequel la couche de sortie comprend :
une première unité de rétablissement (511) qui rétablit la caractéristique de forme en utilisant une partie correspondant à la première étendue de sortie, qui est plus petite que l'image de sortie, dans les données devant être traitées ; et
une seconde unité de rétablissement (512), qui est prévue en parallèle avec la première unité de rétablissement, qui rétablit la caractéristique de forme en utilisant une partie correspondant à la seconde étendue de sortie, qui est plus petite que l'image de sortie et plus grande que la première étendue de sortie, dans les données devant être traitées ;
dans lequel
la couche d'entrée inclut la première unité d'extraction qui est une couche de convolution, la deuxième unité d'extraction qui est une couche de convolution, et l'unité d'acquisition d'informations de déplacement qui est une couche de mise en commun, et
la couche de sortie n'inclut pas la couche de mise en commun, et inclut la première unité de rétablissement qui est une couche de convolution transposée et la seconde unité de rétablissement qui est une couche de convolution de transpositionnement ; et
dans lequel la pluralité de paramètres de calcul est ajustée, par entraînement, de telle sorte que la différence entre des données d'image de référence d'une image de référence incluant un objet de référence sans défaut et des données d'image de sortie générées en entrant les données d'image de référence dans le modèle d'apprentissage machine est plus petite qu'un seuil d'erreur prédéterminé.

2. Programme d'ordinateur selon la revendication 1, dans lequel l'une ou les plusieurs unités d'obtention d'informations de déplacement comprennent :
une première unité d'obtention d'informations de déplacement (321) qui obtient des première informations de déplacement qui concernent un déplacement de position dans les limites d'une première étendue de déplacement plus petite que l'image d'entrée ; et
une seconde unité d'obtention d'informations de déplacement (322), qui est prévue en parallèle avec la première unité d'acquisition d'informations de déplacement, qui obtient des secondes informations de déplacement qui concernent un déplacement de position dans les limites d'une seconde étendue de déplacement qui est plus petite que l'image d'entrée et plus grande que la première étendue de déplacement, et
l'unité d'addition additionne la pluralité de données incluant les données sorties en provenance de la première unité d'extraction, les données sorties en provenance de la deuxième unité d'extraction, les données sorties en provenance de la première unité d'obtention d'informations de déplacement, et les données sorties en provenance de la seconde unité d'obtention d'informations de déplacement.

3. Programme d'ordinateur selon l'une ou l'autre des revendications 1 ou 2, dans lequel la couche d'entrée comprend :
une troisième unité d'extraction (313), qui est prévu en parallèle avec la première unité d'extraction et la deuxième unité d'extraction, qui extrait la caractéristique de forme de the partie incluse dans une troisième étendue d'entrée qui est plus petite que l'image d'entrée et plus grande que la deuxième étendue d'entrée de l'objet d'entrée, et
l'unité d'addition additionne la pluralité de données incluant les données sorties en provenance de la première unité d'extraction, les données sorties en provenance de la deuxième unité d'extraction, les données sorties en provenance de la troisième unité d'extraction, et les données sorties en provenance de l'une ou des plusieurs unités d'obtention d'informations de déplacement.

4. Programme d'ordinateur selon la revendication 1, qui amène un ordinateur à réaliser :
une fonction d'obtention pour obtenir des données d'image d'entrée de l'image d'entrée incluant l'objet d'entrée, et
une fonction de génération de données d'image de différence qui génère des données d'image de différence de l'image de différence représentant la différence entre l'image d'entrée et l'image de sortie des données d'image de sortie.

5. Programme d'ordinateur selon la revendication 4,
dans lequel l'unité de génération de données d'image de différence
obtient des données d'image d'entrée lissées en réalisant un processus de lissage sur les données d'image d'entrée,
obtient des données d'image de sortie lissées en réalisant un processus de lissage sur les données d'image de sortie, et
génère les données d'image de différence en utilisant les données d'image d'entrée lissées et les données d'image de sortie lissées.

6. Programme d'ordinateur selon la revendication 5,
dans lequel l'unité de génération de données d'image de différence
réalise un processus d'extraction de contour pour extraire une partie de contour dans l'image des données d'image de sortie lissées, et
corrige les données d'image de différence en réalisant, sur les données d'image de différence, un processus d'extraction, de l'image de différence, d'une partie de non-contour qui est différente de la partie de contour.

7. Programme d'ordinateur selon l'une quelconque des revendications précédentes, dans lequel les données d'image d'entrée sont des données d'image d'une apparence d'un produit, dans lequel le produit est :
(i) une feuille d'étiquette (700) sur laquelle divers objets tels que des caractères et figures sont imprimés ; ou
(ii) un produit en papier, de préférence une boîte ou une enveloppe ; ou
(iii) un produit en tissu, de préférence une chemise ou une serviette ; ou
(iv) une pièce de machine.

8. Dispositif de génération (200), pour générer des données d'image, comprenant :
une unité d'obtention qui obtient des données d'image d'entrée (910, 810) d'une image d'entrée (910i, 810i) incluant un objet d'entrée (701, 702, 801, 802) ; et
une unité de génération de données d'image de sortie qui génère des données d'image de sortie (940, 840) correspondant aux données d'image d'entrée en entrant les données d'image d'entrée dans un modèle d'apprentissage machine entraîné,
dans lequel
le modèle d'apprentissage machine réalise l'extraction d'une caractéristique de forme de l'objet d'entrée inclus dans l'image d'entrée des données d'image d'entrée, et la génération des données d'image de sortie de l'image de sortie (940i, 840i) incluant l'objet de sortie (950) sur la base de la caractéristique de forme extraite, en exécutant une opération utilisant une pluralité de paramètres de calcul sur les données d'image d'entrée,
le modèle d'apprentissage machine comprend :
une couche d'entrée (L10) qui exécute une opération en utilisant les données d'image d'entrée ; et
une couche de sortie (L30) qui est prévue sur le côté aval de la couche d'entrée et génère les données d'image de sortie,
la couche d'entrée comprend :
une première unité d'extraction (311) qui extrait une caractéristique de forme d'une partie incluse dans une première étendue d'entrée, qui est plus petite que l'image d'entrée, dans l'objet d'entrée ;
une deuxième unité d'extraction (312) qui est prévu en parallèle avec la première unité d'extraction, qui extrait une caractéristique de forme d'une partie incluse dans une deuxième étendue d'entrée, qui est plus petite que l'image d'entrée et plus grande que la première étendue d'entrée, dans l'objet d'entrée ;
une ou plusieurs unités d'obtention d'informations de déplacement (321, 322) qui obtiennent des informations de déplacement qui concernent un déplacement de position de la caractéristique de forme, dans l'image d'entrée, extraite par la première unité d'extraction dans l'image d'entrée, en exécutant une opération utilisant les données sorties en provenance de la première unité d'extraction ; et
une unité d'addition (331) qui additionne une pluralité de données incluant des données sorties en provenance de la première unité d'extraction, des données sorties en provenance de la deuxième unité d'extraction, et des données sorties en provenance de l'une ou des plusieurs unités d'acquisition d'informations de déplacement,
dans lequel la couche de sortie comprend :
une première unité de rétablissement (511) qui rétablit la caractéristique de forme en utilisant une partie correspondant à la première étendue de sortie, qui est plus petite que l'image de sortie, dans les données devant être traitées ; et
une seconde unité de rétablissement (512), qui est prévue en parallèle avec la première unité de rétablissement, qui rétablit la caractéristique de forme en utilisant une partie correspondant à la seconde étendue de sortie, qui est plus petite que l'image de sortie et plus grande que la première étendue de sortie, dans les données devant être traitées ;
dans lequel
la couche d'entrée inclut la première unité d'extraction qui est une couche de convolution, la seconde unité d'extraction qui est une couche de convolution, et l'unité d'acquisition d'informations de déplacement qui est une couche de mise en commun, et
la couche de sortie n'inclut pas la couche de mise en commun, et inclut la première unité de rétablissement qui est une couche de convolution transposée et la seconde unité de rétablissement qui est une couche de convolution de transpositionnement, et
dans lequel la pluralité de paramètres de calcul est ajustée, par entraînement, de telle sorte que la différence entre des données d'image de référence d'une image de référence incluant un objet de référence sans défaut et des données d'image de sortie générées en entrant les données d'image de référence dans le modèle d'apprentissage machine est plus petite qu'un seuil d'erreur prédéterminé.

9. Dispositif de génération selon la revendication 8, comprenant une unité de génération de données d'image de différence qui génère des données d'image de différence de l'image de différence représentant une différence entre les données d'image de sortie des données d'image de sortie et les données d'image d'entrée.

10. Dispositif de génération selon la revendication 9,
dans lequel l'unité de génération de données d'image de différence
obtient des données d'image d'entrée lissées en réalisant un processus de lissage sur les données d'image d'entrée,
obtient des données d'image de sortie lissées en réalisant un processus de lissage sur les données d'image de sortie, et
génère les données d'image de différence en utilisant les données d'image d'entrée lissées et les données d'image de sortie lissées.

11. Dispositif de génération selon la revendication 10,
dans lequel l'unité de génération de données d'image de différence
réalise un processus d'extraction de contour pour extraire une partie de contour dans l'image des données d'image de sortie lissées, et
corrige les données d'image de différence en réalisant, sur les données d'image de différence, un processus d'extraction, de l'image de différence, d'une partie de non-contour qui est différente de la partie de contour.

12. Dispositif de génération selon l'une quelconque des revendications 8 à 11, dans lequel les données d'image d'entrée sont des données d'image d'une apparence d'un produit, dans lequel le produit est :
(i) une feuille d'étiquette (700) sur laquelle divers objets tels que des caractères et figures sont imprimés ; ou
(ii) un produit en papier, de préférence une boîte ou une enveloppe ; ou
(iii) un produit en tissu, de préférence une chemise ou une serviette ; ou
(iv) une pièce de machine.
